# EUROPEAN PATENT APPLICATION

(11) **EP 4 697 210 A1**
(43) Date of publication of application: **18.02.2026**
(21) Application number: 24865695.1
(22) Date of filing: 08.08.2024
(51) Int. Cl.: G06F 21/32, G06F 21/53, H04N 25/70, G06T 1/60, G06T 1/20, G06V 40/18, H05B 47/155

(54) **ELECTRONIC DEVICE COMPRISING IMAGE SENSOR, OPERATION METHOD THEREFOR, AND RECORDING MEDIUM**

(30) Priority: 11.09.2023 KR 20230120236; 12.10.2023 KR 20230136257
(71) Applicant: Samsung Electronics Co., Ltd., Suwon-si, Gyeonggi-do 16677 (KR)
(72) Inventor: YOU, Heejun, Suwon-si Gyeonggi-do 16677 (KR); SHIN, Minsoo, Suwon-si Gyeonggi-do 16677 (KR); CHOI, Wonjung, Suwon-si Gyeonggi-do 16677 (KR)
(74) Representative: HGF
(86) International application number: PCT/KR2024/011822
(87) International publication number: WO 2025/058253

(57) **Abstract**

This electronic device may comprise: an image sensor; an image preprocessor comprising a circuit; a memory for storing instructions; and a processor comprising a processing circuit. The instructions, when executed individually and/or collectively by at least one processor, may instruct the electronic device to acquire raw data including biometric data by using the image sensor. The instructions, when executed individually and/or collectively by the at least one processor, may instruct the electronic device to store the raw data as first image data in a first buffer. The instructions, when executed individually and/or collectively by the at least one processor, may instruct the electronic device to store, in a second buffer, second image data generated by applying a change operation to the raw data by using the image preprocessor. The instructions, when executed individually and/or collectively by the at least one processor, may instruct the electronic device to: transmit the first image data stored in the first buffer to a first application belonging to a secure area; and apply a first algorithm for biometric authentication to the first image data. The instructions, when executed individually and/or collectively by the at least one processor, may instruct the electronic device to: transmit the second image data stored in the second buffer to a second application belonging to a non-secure area; and apply a second algorithm distinguished from the first algorithm to the second image data. Various other embodiments are possible.

## Description

### [Technical Field]

The disclosure relates to an electronic device including an image sensor, a method for operating the same, and a recording medium.

### [Background Art]

Biometric authentication refers to a technology that uses human physical and behavioral characteristics to determine identity and grant access to specific systems or data. Unlike traditional authentication schemes (e.g., those using pin number, pattern, or password) that require complex setting values for reinforcing security which may be difficult to remember, biometric authentication eliminates the need for memorizing and, if there is reliable recognition performance, provides significant convenience to users. By such advantages, biometric authentication is widely used for systems that require user authentication such as bank ATMs or mobile devices. In the pin number, pattern, and password scheme, when the setting values leak out, the pin number, pattern, or password may easily be changed into a new one. However, in biometric authentication, biometric data (e.g., face, iris, fingerprint, or vein), once leaking out, is not easy to change, and permanent damage may result. For these reasons, it is very critical to safely protect biometric data used for biometric authentication.

An electronic device may include a user interface that provides augmented reality (AR), virtual reality (VR), mixed reality (MR), and extended reality (XR) experiences.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

A biometric authentication scheme using a camera may perform authentication by receiving biometric data (e.g., face, iris, fingerprint, or vein) from the camera and apply the biometric data to a biometric authentication algorithm.

Embodiments of the disclosure may provide an electronic device that may perform operations (e.g., biometric authentication operation) in a secure area and operations in a non-secure area through the same camera.

According to an example embodiment, an electronic device may comprise: an image sensor, an image pre-processor, comprising circuitry, memory storing instructions, and at least one processor, comprising processing circuitry. The instructions, when executed by at least one processor, individually and/or collectively, may cause the electronic device to: obtain raw data including biometric data using the image sensor. The instructions, when executed by at least one processor, individually and/or collectively, may cause the electronic device to store, in a first buffer, the raw data as first image data. The instructions, when executed by at least one processor, individually and/or collectively, may cause the electronic device to store, in a second buffer, second image data generated by applying a change operation to the raw data using the image pre-processor. The instructions, when executed by at least one processor, individually and/or collectively, may cause the electronic device to forward the first image data stored in the first buffer to a first application included in a secure area apply a first algorithm for biometric authentication to the first image data. The instructions, when executed by at least one processor, individually and/or collectively, may cause the electronic device to forward the second image data stored in the second buffer to a second application included in a non-secure area apply a second algorithm different from the first algorithm to the second image data.

According to an example embodiment, a method for operating an electronic device may comprise obtaining raw data including biometric data using an image sensor of an electronic device. The method may comprise storing, in a first buffer, the raw data as first image data. The method may comprise storing second image data generated by applying a change operation to the raw data in the second buffer. The method may comprise forwarding the first image data stored in the first buffer to a first application included in a secure area, and applying a first algorithm for biometric authentication to the first image data. The method may comprise forwarding the second image data stored in the second buffer to a second application included in a non-secure area and applying a second algorithm different from the first algorithm to the second image data.

According to an example embodiment, in a non-transitory computer-readable recording medium storing instructions which, when executed by at least one processor, individually and/or collectively, of an electronic device, cause the electronic device to perform at least one operation, the at least one operation may comprise obtaining raw data including biometric data using an image sensor 230 of the electronic device. The at least one operation may comprise storing, in a first buffer, the raw data as first image data. The at least one operation may comprise storing second image data generated by applying a change operation to the raw data in a second buffer. The at least one operation may comprise forwarding the first image data stored in the first buffer to a first application included in a secure area and applying a first algorithm for biometric authentication to the first image data. The at least one operation may comprise forwarding the second image data stored in the second buffer to a second application included in a non-secure area and applying a second algorithm different from the first algorithm to the second image data.

### [Brief Description of Drawings]

The above and other aspects, features and advantages of certain embodiments of the present disclosure will be more apparent from the following detailed description, taken in conjunction with the accompanying drawings, in which:
FIG. 1 is a block diagram illustrating an electronic device in a network environment according to an embodiment;
FIG. 2A is a block diagram illustrating a camera module according to an embodiment;
FIG. 2B is a block diagram illustrating an electronic device according to an embodiment;
FIG. 2C is a block diagram illustrating an electronic device according to an embodiment;
FIG. 3 is a view illustrating operations of an electronic device according to an embodiment;
FIG. 4 is a flowchart illustrating an operation method of an electronic device according to an embodiment;
FIG. 5 is a flowchart illustrating an operation method of an electronic device according to an embodiment;
FIG. 6 is a flowchart illustrating an operation method of an electronic device according to an embodiment;
FIG. 7 is a flowchart illustrating an operation method of an electronic device according to an embodiment;
FIG. 8 is a view illustrating operations of an electronic device according to an embodiment;
FIG. 9 is a flowchart illustrating an operation method of an electronic device according to an embodiment;
FIG. 10A is a view illustrating an electronic device according to an embodiment;
FIG. 10B is a view illustrating an electronic device according to an embodiment;
FIG. 10C is a view illustrating an electronic device according to an embodiment;
FIG. 11A is a view illustrating a light emitter and an image sensor of an electronic device according to an embodiment;
FIG. 11B is a view illustrating a light emitter and an image sensor of an electronic device according to an embodiment;
FIG. 12 is a view illustrating operations of an electronic device according to an embodiment;
FIG. 13A is a view illustrating operations of an electronic device according to an embodiment;
FIG. 13B is a view illustrating operations of an electronic device according to an embodiment;
FIG. 14 is a view illustrating operations of an electronic device according to an embodiment;
FIG. 15 is a flowchart illustrating an operation method of an electronic device according to an embodiment; and
FIG. 16 is a flowchart illustrating an operation method of an electronic device according to an embodiment.

### [Mode for the Invention]

Various example embodiments of the disclosure are now described in greater detail with reference to the accompanying drawings. However, the disclosure may be implemented in other various forms and is not limited to the various embodiments set forth herein. The same or similar reference denotations may be used to refer to the same or similar elements throughout the disclosure and the drawings. Further, for clarity and brevity, no description may be made of well-known functions and configurations in the drawings and relevant descriptions.

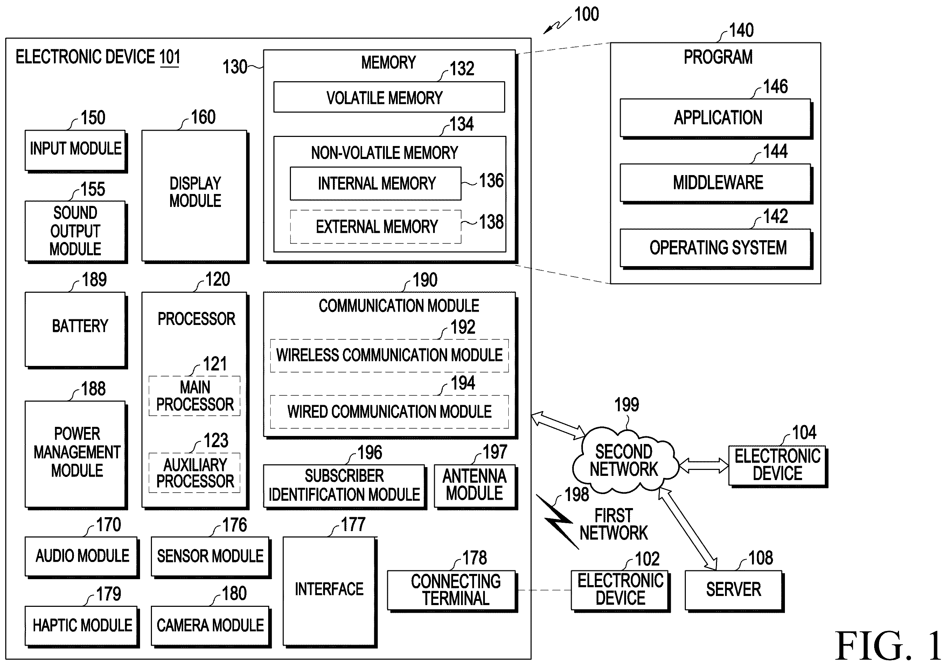

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

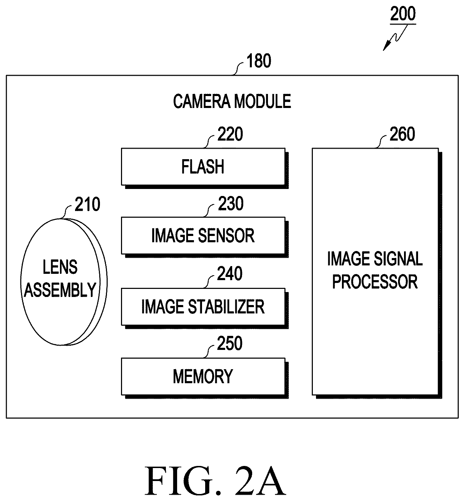

FIG. 2A is a block diagram 220 illustrating a camera module 180 according to an embodiment.

Referring to FIG. 2A, the camera module 180 may include a lens assembly (e.g., including a lens) 210, a flash 220, an image sensor 230, an image stabilizer (e.g., including circuitry) 240, memory 250 (e.g., buffer memory), and/or an image signal processor (e.g., including image processing circuitry) 260. The lens assembly 210 may include at least one lens and collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., field of view, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, e.g., a charged coupled device (CCD) sensor or a complementary metal oxide semiconductor (CMOS) sensor.

The image stabilizer 240 may include various circuitry and move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This makes it possible to compensate for at least some of the negative effects of the movement on the image being taken. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may include various image processing circuitry and perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules 180 may form a rear camera.

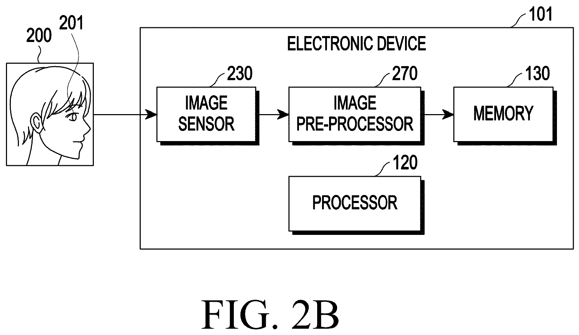

FIG. 2B is a block diagram illustrating an electronic device 101 according to an embodiment.

According to an embodiment, an electronic device 101 may include an image sensor 230, an image pre-processor (e.g., including various circuitry) 270, memory 130, and a processor (e.g, including processing circuitry) 120.

Operations of the electronic device 101 according to an embodiment may be controlled by the processor 120 (e.g., the processor 120 of FIG. 1 and/or the image signal processor 260 of FIG. 2A) of the electronic device 101. Performing a specific operation by the electronic device 101 may be controlling the electronic device 101 or a component included in the electronic device 101 by the processor 120 of the electronic device 101. The electronic device 101 may include one or more processors 120. Hereinafter, even when a plurality of processors 120 are implemented, the operation is described as an "operation of the electronic device 101" or "operation of the processor 120" for convenience of description.

According to an embodiment, the electronic device 101 (e.g., the processor 120) may obtain raw data using the image sensor 230. The "raw data" may be data (e.g., an image corresponding to the subjects 200 and 201) obtained through the image sensor 230. In FIG. 2B, the subjects 200 and 201 may include a human face portion 200 and/or a human eye portion 201, but this is merely an example. For example, raw data obtained through the image sensor 230 may include biometric data (e.g., face, iris, fingerprint, vein).

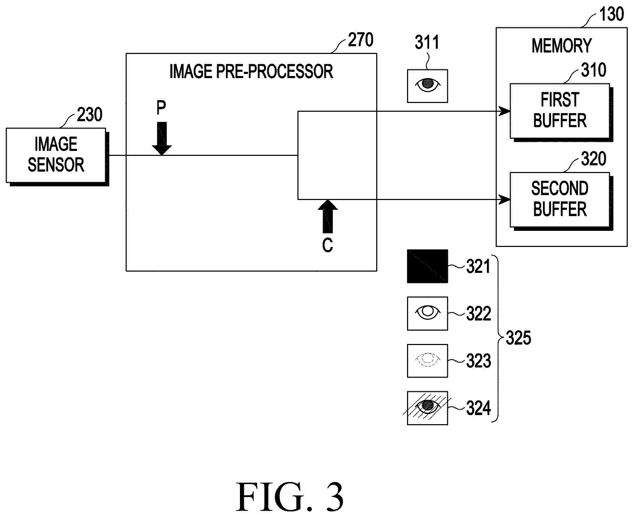

According to an embodiment, the electronic device 101 (e.g., the processor 120) may perform image processing (e.g., image pre-processing and/or a change operation) on raw data using the image pre-processor 270. The image pre-processor 270 may be a hardware module including various circuitry that performs image processing (e.g., image pre-processing and/or change operation). For example, the image pre-processor 270 may receive raw data obtained through the image sensor 230. The image pre-processor 270 may perform image pre-processing (e.g., auto focus, auto exposure, auto white balance (3A)) and/or change operation on raw data. The change operation is an operation of changing (or transforming) biometric data, and the change operation is described below with reference to FIG. 3.

According to an embodiment, the electronic device 101 (e.g., the processor 120) may store, in the memory 130, data (e.g., image data) on which image processing (e.g., image pre-processing and/or change operation) is performed by the image pre-processor 270. For example, the image pre-processor 270 may transfer data (e.g., image data) on which image processing (e.g., image pre-processing and/or change operation) is performed to the memory 130. The memory 130 may store data received from the image pre-processor 270.

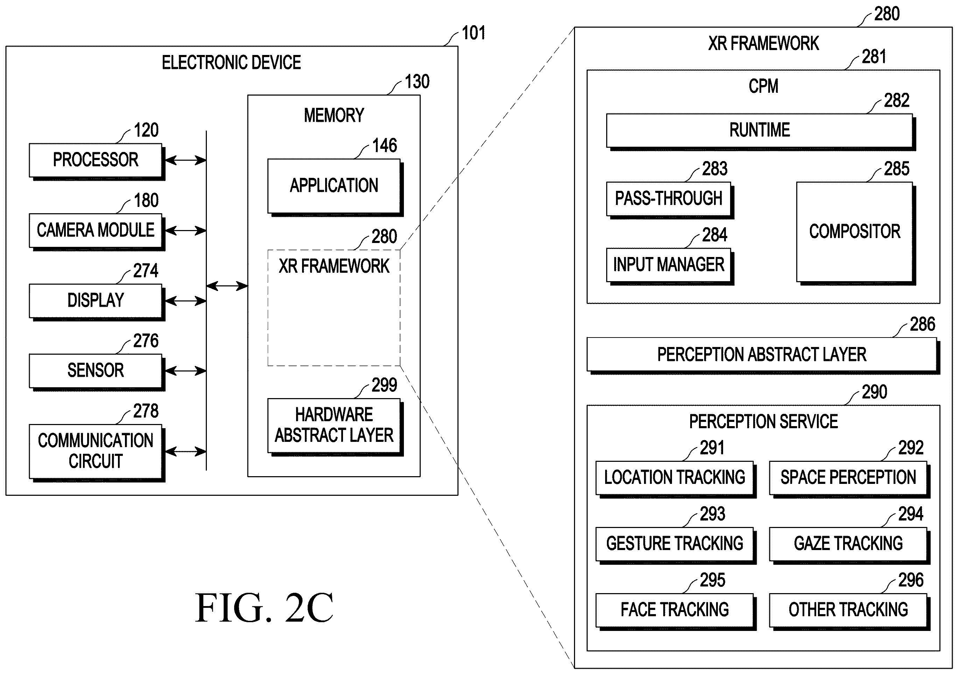

FIG. 2C is a block diagram illustrating an electronic device 101 according to an embodiment.

According to an embodiment, the electronic device 101 may include a processor (e.g., including processing circuitry) 120, a camera module (e.g., including a camera) 180, a display 274 (e.g., at least one display included in the display module 160 of FIG. 1), a sensor 276 (e.g., at least one sensor included in the sensor module 176 of FIG. 1), a communication circuit 278 (e.g., at least one communication circuit included in the communication module 190 of FIG. 1), and memory 130.

According to an embodiment, the memory 130 may include an XR framework 280 and a hardware abstract layer 299. For example, the XR framework 280 may be designed to utilize OpenXR standard-based rendering and input structures for the platform. For example, the hardware abstract layer 299 may include an interface for hardware operation.

According to an embodiment, the XR framework 280 may include a compositing presentation manager (CPM) 281, a perception abstract layer 286, and a perception service 290.

According to an embodiment, the perception abstract layer 286 may be an interface for the perception service 290 and the CPM 281.

According to an embodiment of the disclosure, the perception service 290 may estimate tracking data through the perception solution(s) based on the obtained sensor data. The perception service 290 may include location tracking 291, space perception 292, gesture tracking 293, gaze tracking 294, face tracking 295, and other tracking 296 (e.g., tracking for other components). For example, the electronic device 101 may estimate a 6 degrees of freedom (6DoF) pose of the electronic device 101 (e.g., a head mounted device (HMD)) using an IMU input and a perception camera through location tracking 291 (e.g., head tracking (HeT)) of the perception service 290. For example, through space perception 292 (e.g., scene understanding (SU)) of the perception service 290, the electronic device 101 may reconstruct the surrounding environment in 3D using a perception camera input, a 6DoF pose, and a time of flight (ToF), and may perform a plane perception operation based thereon. The electronic device 101 may additionally utilize a camera input for photographing for space perception 292. For example, through gesture tracking 293 (e.g., hand tracking (HaT)) of the perception service 290, the electronic device 101 may track the user's hand pose and recognize the gesture using the perception camera and the ToF input. For example, the electronic device 101 may estimate and track the user's eye movement (or pupil movement) using an ET camera and an infrared (IR) LED through eye tracking 294 (e.g., eye tracking (ET)) of the perception service 290. For example, the electronic device 101 may estimate and track the user's face movement using an FT camera and an IR LED through face tracking 295 (e.g., face tracking (FT)) of the perception service 290. For example, the electronic device 101 may estimate and track the user's iris using an IR camera (e.g., an IR sensor included in the image sensor of FIG. 2) and an IR LED through other tracking 296 (e.g., iris tracking) of the perception service 290.

According to an embodiment, the CPM 281 may include a runtime 282, a pass-through 283, an input manager 284, and a compositor 285. The CPM 281 may include the virtual node rendered based on data (e.g., tracking data) obtained from the perception abstract layer 286 through the input manager 284 and the node obtained through the pass-through 283 (e.g., the pass-through library).

FIG. 3 is a view illustrating operations of an electronic device 101 according to an embodiment.

Referring to FIG. 3, according to an embodiment, the memory 130 of the electronic device 101 may include a first buffer 310 (e.g., a secure buffer) and a second buffer 320 (e.g., a non-secure buffer). For example, the first buffer 310 and the second buffer 320 may be areas dynamically allocated in the memory 130.

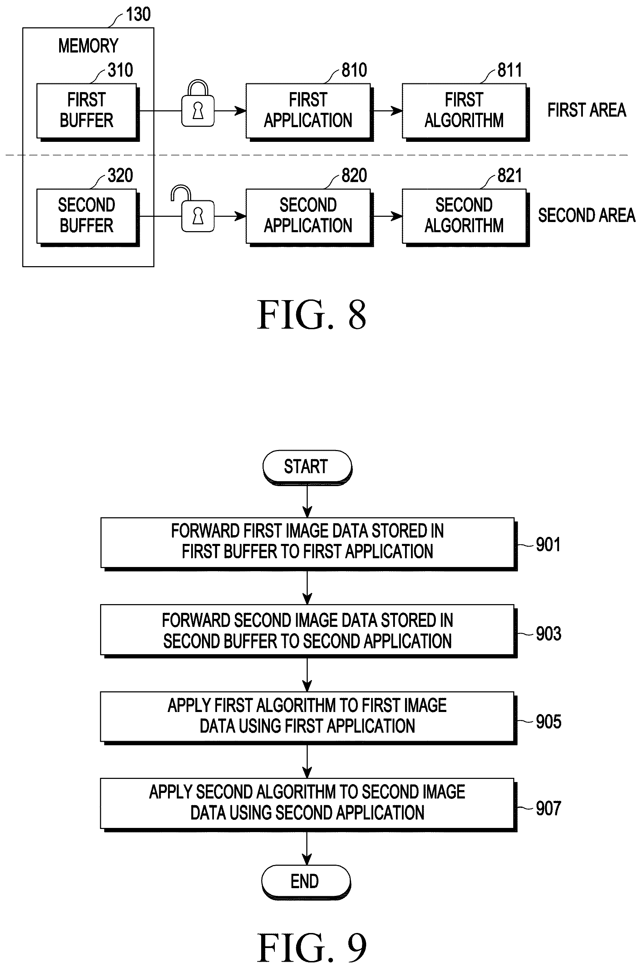

According to an embodiment, the first buffer 310 (e.g., a secure buffer) may be a buffer in which data including biometric data is stored. The secure buffer (e.g., 310) may be a buffer accessible in the secure area (e.g., the first area of FIG. 8). For example, the secure area may be an area corresponding to a secure execution environment (e.g., a trusted execution environment (TEE)). According to an embodiment, the electronic device 101 may include a secure processor. The secure processor may correspond to a separate secure area that is physically divided. For example, the secure area may be an area corresponding to the secure processor including the secure memory or an embedded secure element (eSE). For example, the secure processor or eSE of the electronic device 101 may process data stored in a secure buffer (e.g., 310). According to an embodiment, the second buffer 320 (e.g., a non-secure buffer) may be a buffer in which data on which a change operation is performed is stored in biometric data. The non-secure buffer (e.g., 320) may be a buffer accessible in the non-secure area (e.g., the second area of FIG. 8). The non-secure area may be an area corresponding to a general execution environment (e.g., rich execution environment (REE)). According to an embodiment, the electronic device 101 (e.g., the processor 120) may store data (e.g., image data) obtained by performing image processing (e.g., image pre-processing and/or change operation) by the image pre-processor 270 in the first buffer 310 and/or the second buffer 320 of the memory 130.

Referring to FIG. 3, according to an embodiment, the electronic device 101 (e.g., the processor 120) may perform image processing (e.g., image pre-processing and/or change operation) on raw data obtained through the image sensor 230 using the image pre-processor 270.

For example, the electronic device 101 may perform image pre-processing (e.g., P of FIG. 3) on raw data using the image pre-processor 270. The image pre-processing may include, e.g., 3A (auto focus, auto exposure, auto white balance).

For example, the electronic device 101 may perform a change operation (e.g., C of FIG. 3) on raw data using the image pre-processor 270. Although FIG. 3 illustrates an example of performing image pre-processing and then performing a change operation, the electronic device 101 may directly perform a change operation on raw data obtained through the image sensor 230, or may perform a change operation on raw data on which image pre-processing has been performed as illustrated in FIG. 3. The "change operation" may be an operation of changing (or transforming) biometric data included in raw data (or raw data on which image pre-processing has been performed). For example, the change operation may be an operation of performing image processing on biometric data or raw data including biometric data (or raw data on which image pre-processing has been performed). For example, the electronic device 101 may perform image processing on the entire raw data including biometric data (or raw data on which image pre-processing has been performed). For example, the electronic device 101 may perform image processing on an area corresponding to biometric data in raw data including biometric data (or raw data on which image pre-processing has been performed). For example, the change operation (e.g., image processing performed on biometric data or raw data including biometric data (or raw data on which image pre-processing has been performed)) may include at least one of blank processing (e.g., 321 of FIG. 3), removal of biometric data (e.g., 322 of FIG. 3), blur processing (e.g., 323 of FIG. 3), or hatching processing (e.g., 324 of FIG. 3). "Blank processing" may be blank processing on an entire area of raw data (or raw data on which image pre-processing has been performed) or an area corresponding to biometric data included in raw data (or raw data on which image pre-processing has been performed). "Removal of biometric data" may be an operation of removing an area corresponding to biometric data included in raw data (or raw data on which image pre-processing has been performed). When the biometric data is removed, the area other than the area corresponding to the biometric data may be the same as the original data (e.g., raw data (or raw data on which image pre-processing has been performed)). "Blur processing" may be blur processing on the entire area of raw data (or raw data on which image pre-processing has been performed) or an area corresponding to biometric data included in raw data (or raw data on which image pre-processing has been performed). For example, when blur processing is performed on the area corresponding to the biometric data, the area other than the area corresponding to the biometric data may be the same as the original data (e.g., raw data (or raw data on which image pre-processing has been performed)). "Hatching processing" may be a hatching processing for an entire area of raw data (or raw data on which image pre-processing has been performed) or an area corresponding to biometric data included in raw data (or raw data on which image pre-processing has been performed). For example, when hatching processing is performed on the area corresponding to the biometric data, the area other than the area corresponding to the biometric data may be the same as the original data (e.g., raw data (or raw data on which image pre-processing has been performed)).

According to an embodiment, the electronic device 101 (e.g., the processor 120) may identify the location of biometric data in raw data (or raw data on which image pre-processing has been performed) and may perform image processing (e.g., at least one of blank processing, removal of biometric data, blur processing, or hatching processing) on the identified location of the biometric data. For example, the electronic device 101 (e.g., the processor 120) may identify biometric data (e.g., the location of biometric data) from raw data (or raw data on which image pre-processing has been performed), based on information (e.g., information about the location of biometric data) stored in the memory 130. For example, the electronic device 101 (e.g., the processor 120) may store information about the location of biometric data to be included in the raw data in the memory 130 before the raw data is obtained. The electronic device 101 may identify the location of biometric data in raw data (or raw data on which image pre-processing has been performed), based on information stored in the memory 130 (e.g., information about the location of biometric data to be included in the raw data). According to an embodiment, the electronic device 101 may include the memory 130 in which information about the location of biometric data to be included in raw data is stored. According to an embodiment, the electronic device 101 may identify the location of the biometric data at the first time, based on a first raw data or the image data corresponding to the first raw data, and may store information about the identified location of the biometric data in the memory 130. The electronic device 101 may obtain the second raw data at a second time after the first time, and may identify the location of the biometric data in the second raw data (or the second raw data on which image pre-processing has been performed), based on the information about the location of the biometric data identified before the second time (e.g., at the first time).

According to an embodiment, referring to FIG. 3, the electronic device 101 may store first image data 311 (e.g., image data including biometric data (e.g., iris)) identified by performing image pre-processing (P) on raw data in the first buffer 310 of the memory 130. For example, referring to FIG. 3, the electronic device 101 may store second image data 325 (e.g., image data obtained by performing image processing on an area corresponding to biometric data) identified by performing image pre-processing (P) and changing (C) on raw data in the second buffer 320 of the memory 130. The second image data 325 stored in the second buffer 320 may be data obtained by performing a change operation on raw data obtained through the image sensor 230, or may be data obtained by performing a change operation on the first image data 311 obtained by performing image pre-processing on raw data.

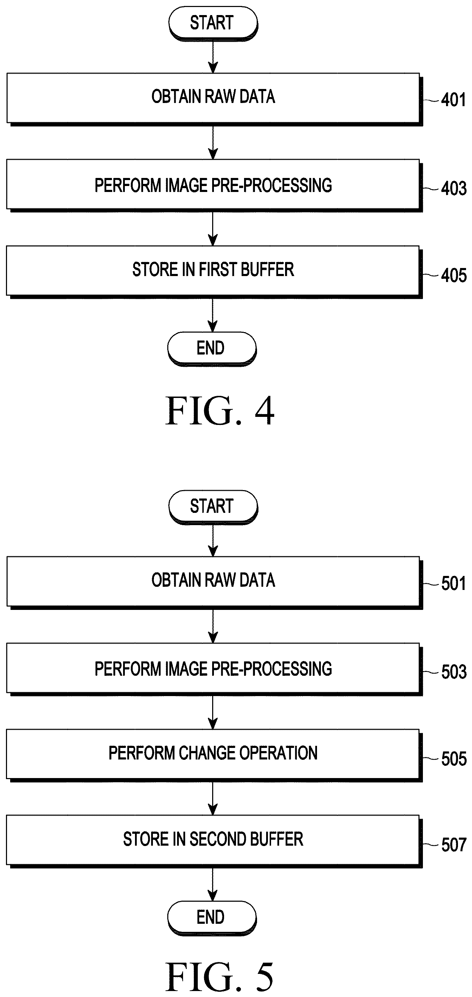

FIG. 4 is a flowchart illustrating an operation method of an electronic device 101 according to an embodiment. FIG. 4 may be described with reference to the above-described embodiment.

At least some of the operations of FIG. 4 may be omitted. The operation order of the operations of FIG. 4 may be changed. Operations other than the operations of FIG. 4 may be performed before, during, or after the operations of FIG. 4.

Referring to FIG. 4, in operation 401, according to an embodiment, the electronic device 101 (e.g., the processor 120) may obtain raw data using the image sensor 230. The raw data may be data (e.g., an image corresponding to the subjects 200 and 201) obtained through the image sensor 230.

In operation 403, according to an embodiment, the electronic device 101 (e.g., the processor 120) may perform image pre-processing (e.g., 3A) on the raw data of operation 401, using the image pre-processor 270. The electronic device 101 may identify the image data (e.g., 311 of FIG. 3) by performing image pre-processing (e.g., 3A) on the raw data of operation 401.

In operation 405, according to an embodiment, the electronic device 101 (e.g., the processor 120) may store image data (e.g., 311 of FIG. 3) on which image pre-processing has been performed, in the first buffer 310 (e.g., the secure buffer) of the memory 130.

FIG. 5 is a flowchart illustrating an operation method of an electronic device 101 according to an embodiment. FIG. 5 may be described with reference to the above-described embodiment.

At least some of the operations of FIG. 5 may be omitted. The operation order of the operations of FIG. 5 may be changed. Operations other than the operations of FIG. 5 may be performed before, during, or after the operations of FIG. 5.

Referring to FIG. 5, in operation 501, according to an embodiment, the electronic device 101 (e.g., the processor 120) may obtain raw data using the image sensor 230. The raw data may be data (e.g., an image corresponding to the subjects 200 and 201) obtained through the image sensor 230.

In operation 503, according to an embodiment, the electronic device 101 (e.g., the processor 120) may perform image pre-processing (e.g., 3A) on the raw data of operation 501, using the image pre-processor 270.

In operation 505, according to an embodiment, the electronic device 101 (e.g., the processor 120) may perform an operation of changing the data obtained by performing image pre-processing in operation 503, using the image pre-processor 270. The change operation may be an operation of performing image processing (e.g., at least one of blank processing, removal of biometric data, blur processing, or hatching processing) on the biometric data. The electronic device 101 may identify image data (e.g., 325 of FIG. 3) by performing image pre-processing in operation 503 and changing in operation 505 on the raw data of operation 501.

In operation 507, according to an embodiment, the electronic device 101 (e.g., the processor 120) may store image data (e.g., 325 of FIG. 3) on which image pre-processing and change operation have been performed, in a second buffer 320 (e.g., a non-secure buffer) of the memory 130.

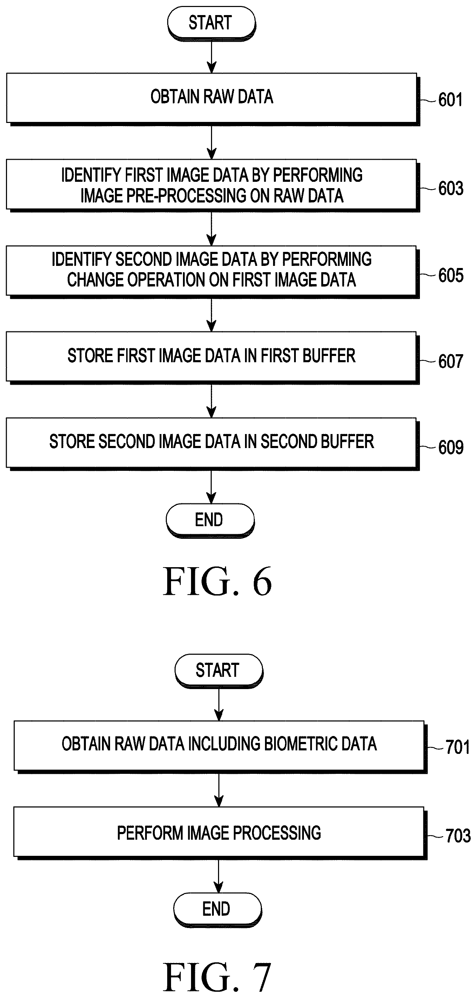

FIG. 6 is a flowchart illustrating an operation method of the electronic device 101 according to an embodiment. FIG. 6 may be described with reference to the above-described embodiment.

At least some of the operations of FIG. 6 may be omitted. The operation order of the operations of FIG. 6 may be changed. Operations other than the operations of FIG. 6 may be performed before, during, or after the operations of FIG. 6.

Referring to FIG. 6, in operation 601, according to an embodiment, the electronic device 101 (e.g., the processor 120) may obtain raw data using the image sensor 230. The raw data may be data (e.g., an image corresponding to the subjects 200 and 201) obtained through the image sensor 230.

In operation 603, according to an embodiment, the electronic device 101 (e.g., the processor 120) may identify (or generate, process, or obtain) the first image data (e.g., 311 of FIG. 3) by performing image pre-processing on the raw data of operation 601, using the image pre-processor 270.

In operation 605, according to an embodiment, the electronic device 101 (e.g., the processor 120) may identify (or generate, process, or obtain) the second image data (e.g., 325 of FIG. 3) by performing an operation of changing the first image data (e.g., 311 of FIG. 3) in operation 603, using the image pre-processor 270.

In operation 607, according to an embodiment, the electronic device 101 (e.g., the processor 120) may store the first image data (e.g., 311 of FIG. 3) of operation 603 in the first buffer 310. The electronic device 101 may store first image data (e.g., 311 of FIG. 3) provided from the image pre-processor 270 in the first buffer 310.

In operation 609, according to an embodiment, the electronic device 101 (e.g., the processor 120) may store the second image data (e.g., 325 of FIG. 3) of operation 605 in the second buffer 320. The electronic device 101 may store the second image data (e.g., 325 of FIG. 3) provided from the image pre-processor 270 in the second buffer 320.

FIG. 7 is a flowchart illustrating an operation method of the electronic device 101 according to an embodiment. FIG. 7 may be described with reference to the above-described embodiment.

At least some of the operations of FIG. 7 may be omitted. The operation order of the operations of FIG. 7 may be changed. Operations other than the operations of FIG. 7 may be performed before, during, or after the operations of FIG. 7.

Referring to FIG. 7, a change operation on raw data may be understood.

Referring to FIG. 7, in operation 701, according to an embodiment, the electronic device 101 (e.g., the processor 120) may obtain raw data including biometric data. The biometric data may include, for example, and without limitation, a face, an iris, a fingerprint, a vein, or the like.

In operation 703, according to an embodiment, the electronic device 101 (e.g., the processor 120) may perform image processing (e.g., at least one of blank processing, removal of biometric data, blur processing, or hatching processing) on the raw data of operation 701. The electronic device 101 may perform image processing (e.g., at least one of blank processing, removal of biometric data, blur processing, or hatching processing) on raw data including biometric data. Image processing of raw data including biometric data may be understood with reference to FIG. 3. For example, the electronic device 101 may perform image processing (e.g., at least one of blank processing, removal of biometric data, blur processing, or hatching processing) before performing image pre-processing on raw data. For example, the electronic device 101 may perform image pre-processing after performing image processing (e.g., at least one of blank processing, removal of biometric data, blur processing, or hatching processing) on raw data. For example, the electronic device 101 may perform image processing (e.g., at least one of blank processing, removal of biometric data, blur processing, or hatching processing) after performing image pre-processing on raw data. For example, the electronic device 101 may perform image processing (e.g., at least one of blank processing, removal of biometric data, blur processing, or hatching processing) without performing image pre-processing on raw data.

According to an embodiment, the electronic device 101 (e.g., the processor 120) may store data on which the change operation (e.g., operation 703) of FIG. 7 has been performed in a non-secure buffer (e.g., 320 of FIG. 3).

FIG. 8 is a view illustrating operations of an electronic device 101 according to an embodiment. FIG. 9 is a flowchart illustrating an operation method of an electronic device according to an embodiment. FIGS. 8 and 9 may be described with reference to the above-described embodiment.

Referring to FIG. 8, a secure area (e.g., a first area) and a non-secure area (e.g., a second area) may be understood.

Referring to FIG. 8, according to an embodiment, an application (e.g., the first application 810) classified as a component belonging to a secure area (e.g., the first area) may access the first buffer 310 of the memory 130. For example, the first application 810 may be a binary operating in the secure area (e.g., an area corresponding to TEE or an area corresponding to the secure processor (or eSE)). The secure area may be an area corresponding to component(s) capable of handling data including biometric data. The component belonging to the secure area may handle data including biometric data. The data including the biometric data may be data on which the change operation has not been performed.

Referring to FIG. 8, according to an embodiment, an application (e.g., the second application 820) classified as a component belonging to the non-secure area (e.g., the second area) may access the second buffer 320 of the memory 130. For example, the second application 820 may be a binary operating in the non-secure area (e.g., REE). The non-secure area may be an area corresponding to a component(s) capable of handling data that does not include biometric data. The component belonging to the non-secure area may handle data not including biometric data. Data that does not include biometric data may be data that does not include biometric data from the beginning, or data obtained by performing a change operation on the original data (e.g., raw data or data on which image pre-processing has been performed).

According to an embodiment, the electronic device 101 may include a separate secure processor (or eSE) that is physically distinguished. The secure processor (or eSE) of the electronic device 101 may correspond to the secure area. The secure processor (or eSE) of the electronic device 101 may access the first buffer 310. The secure processor (or eSE) of the electronic device 101 may process data stored in the first buffer 310. The secure processor (or eSE) of the electronic device 101 may apply a biometric authentication algorithm (e.g., the first algorithm 811) to data stored in the first buffer 310.

Configurations of FIG. 9 and the above-described embodiments may be described in detail with reference to FIG. 9.

At least some of the operations of FIG. 9 may be omitted. The operation order of the operations of FIG. 9 may be changed. Operations other than the operations of FIG. 9 may be performed before, during, or after the operations of FIG. 9.

Referring to FIG. 9, in operation 901, according to an embodiment, the electronic device 101 (e.g., the processor 120) may transfer (e.g., forward) first image data (e.g., 311 of FIG. 3) (e.g., data including biometric data) stored in the first buffer 310 to the first application 810. The first application 810 may obtain first image data (e.g., 311 of FIG. 3) stored in the first buffer 310. The first application 810 may be an application belonging to the secure area (e.g., the first area). The first application 810 may be an application for biometric authentication. For example, the first application 810 may perform biometric authentication on the user of the electronic device 101 by applying the first algorithm 811 to the image data.

In operation 903, according to an embodiment, the electronic device 101 (e.g., the processor 120) may transfer (e.g., forward) second image data (e.g., 325 of FIG. 3) (e.g., data not including biometric data or data on which image processing for biometric data has been performed) stored in the second buffer 320 to the second application 820. The second application 820 may obtain second image data (e.g., 325 of FIG. 3) stored in the second buffer 320. The second application 820 may be an application belonging to the non-secure area (e.g., the second area). The second application 820 may be an application irrelevant to biometric authentication. The second application 820 may be an application for camera image processing that does not require security. For example, the second application 820 may perform gaze tracking on the user of the electronic device 101 by applying the second algorithm 821 to the image data. For example, the second application 820 may perform an image preview (e.g., an image preview through a display (e.g., 160 of FIG. 1)) by applying the second algorithm 821 to the image data. For example, the second application 820 may perform video recording by applying the second algorithm 821 to the image data. Operations that may be performed by the second application 820 are not limited to gaze tracking, image preview, or video recording.

According to an embodiment, at least a portion of the period during which operation 901 is performed may correspond to at least a portion of the period during which operation 903 is performed. For example, the electronic device 101 (e.g., the processor 120) may transfer the second image data (e.g., 325 of FIG. 3) stored in the second buffer 320 to the second application 820 during a period at least partially overlapping a period for transferring the first image data (e.g., 311 of FIG. 3) stored in the first buffer 310 to the first application 810.

According to an embodiment, operations 901 and 903 may be alternately performed. For example, the electronic device 101 (e.g., the processor 120) may transfer first image data (e.g., 311 of FIG. 3) stored in the first buffer 310 to the first application 810 during the first period, and may transfer second image data (e.g., 325 of FIG. 3) stored in the second buffer 320 to the second application 820 during the second period after the first period. For example, the electronic device 101 (e.g., the processor 120) may transfer first image data (e.g., 311 of FIG. 3) stored in the first buffer 310 to the first application 810 during the first period, may transfer second image data (e.g., 325 of FIG. 3) stored in the second buffer 320 to the second application 820 during the second period after the first period, may transfer first image data (e.g., 311 of FIG. 3) stored in the first buffer 310 to the first application 810 during the third period after the second period, and may transfer second image data (e.g., 325 of FIG. 3) stored in the second buffer 320 to the second application 820 during the fourth period after the third period.

In operation 905, according to an embodiment, the electronic device 101 (e.g., the processor 120) may apply the first algorithm 811 to first image data (e.g., 311 of FIG. 3) (e.g., data including biometric data) provided from the first buffer 310 using the first application 810. The first application 810 may be an application for biometric authentication. The first algorithm 811 may be an algorithm for biometric authentication. The electronic device 101 may perform biometric authentication on the user of the electronic device 101 by applying the first algorithm 811 (e.g., an algorithm for biometric authentication) to the first image data (e.g., 311 of FIG. 3) (e.g., data including biometric data). The type of the first application 810 (e.g., an application for biometric authentication) is not limited. The type of the first algorithm 811 (e.g., an algorithm for biometric authentication) is not limited. The type of biometric authentication is not limited.

In operation 907, according to an embodiment, the electronic device 101 (e.g., the processor 120) may apply the second algorithm 821 to second image data (e.g., 325 of FIG. 3) (e.g., data that does not include biometric data or data obtained by performing a change operation on biometric data) provided from the second buffer 320, using the second application 820. The second application 820 may be an application for camera image processing that does not require security. The second algorithm 821 may be an algorithm for camera image processing that does not require security. For example, the second algorithm 821 may be an algorithm for tracking the user's gaze. For example, the second algorithm 821 may be an algorithm for image preview. For example, the second algorithm 821 may be an algorithm for video recording. For example, the electronic device 101 may perform gaze tracking for the user of the electronic device 101 by applying the second algorithm 821 to the second image data (e.g., 325 of FIG. 3) (e.g., data that does not include biometric data or data obtained by performing a change operation on biometric data). For example, the electronic device 101 may perform an image preview by applying the second algorithm 821 to second image data (e.g., 325 of FIG. 3) (e.g., data that does not include biometric data or data obtained by performing a change operation on biometric data). For example, the electronic device 101 may perform video recording by applying the second algorithm 821 to second image data (e.g., 325 of FIG. 3) (e.g., data that does not include biometric data or data obtained by performing a change operation on biometric data). The type of the second application 820 is not limited. The type of the second algorithm 821 is not limited. The operation that the second application 820 may perform is not limited.

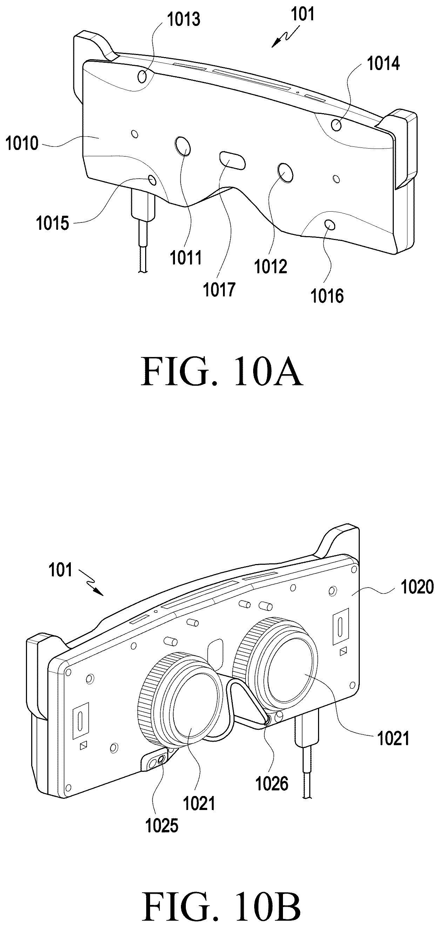

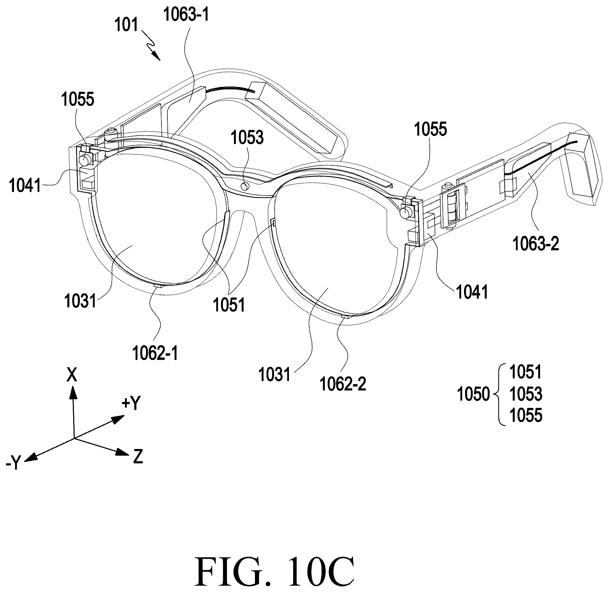

FIG. 10A is a view illustrating an electronic device 101 according to an embodiment. FIG. 10B is a view illustrating an electronic device 101 according to an embodiment. FIG. 10C is a view illustrating an electronic device 101 according to an embodiment.

FIGS. 10A and 10B are views illustrating a front surface and a rear surface of an electronic device 101 according to an embodiment.

Referring to FIGS. 10A and 10B, in an embodiment, camera modules 1011, 1012, 1013, 1014, 1015, and 1016, and/or a depth sensor 1017 for obtaining information related to the surrounding environment of the electronic device 101 may be disposed on the first surface 1010 of the housing.

In an embodiment, the camera modules 1011 and 1012 may obtain an image related to the surrounding environment of the electronic device.

In an embodiment, the camera modules 1013, 1014, 1015, and 1016 may obtain an image while the electronic device is worn by the user. The camera modules 1013, 1014, 1015, and 1016 may be used for hand detection, tracking, and recognition of the user gesture (e.g., hand motion). The camera modules 1013, 1014, 1015, and 1016 may be used for 3DoF or 6DoF head tracking, location (space or environment) recognition, and/or movement recognition. In an embodiment, the camera modules 1011 and 1012 may be used for hand detection and tracking and recognition of the user's gesture.

In an embodiment, the depth sensor 1017 may be configured to transmit a signal and receive a signal reflected from an object and be used for identifying the distance to the object, such as time of flight (TOF). Alternatively or additionally to the depth sensor 1017, the camera modules 1013, 1014, 1015, and 1016 may identify the distance to the object.

According to an embodiment, camera modules 1025 and 1026 for face recognition and/or a display 1021 (and/or lens) may be disposed on the second surface 1020 of the housing.

In an embodiment, the face recognition camera modules 1025 and 1026 adjacent to the display may be used for recognizing the user's face or may recognize and/or track both eyes of the user.

In an embodiment, the display 1021 (and/or lens) may be disposed on the second surface 1020 of the electronic device 101. In an embodiment, the electronic device 101 may not include the camera modules 1015 and 1016 among the plurality of camera modules 1013, 1014, 1015, and 1016. Although not shown in FIGS. 10A and 10B, the electronic device 101 may further include at least one of the components shown in FIG. 10C.

FIG. 10C is a perspective view illustrating an internal configuration of an electronic device according to an embodiment.

Referring to FIG. 10C, an electronic device 101 according to an embodiment may include at least one of a light output module (e.g., including light output circuitry) 1041, a display member (e.g., including a waveguide) 1031, and a camera module (e.g., including a camera) 1050.

According to an embodiment, the light output module 1041 may include a light source capable of outputting an image and a lens guiding the image to the display member 1031. According to an embodiment, the light output module 1041 may include at least one of a liquid crystal display (LCD), a digital mirror device (DMD), a liquid crystal on silicon (LCoS), an organic light emitting diode (OLED), or a micro light emitting diode (micro LED).

According to an embodiment, the display member 1031 may include an optical waveguide (e.g., a waveguide). According to an embodiment, the image output from the light output module 1041 incident on one end of the optical waveguide may propagate inside the optical waveguide and be provided to the user. According to an embodiment, the optical waveguide may include at least one of at least one diffractive element (e.g., a diffractive optical element (DOE) or a holographic optical element (HOE)) or a reflective element (e.g., a reflective mirror). For example, the optical waveguide may guide the image output from the light output module 1041 to the user's eyes using at least one diffractive element or reflective element.

According to an embodiment, the camera module 1050 (e.g., the camera module 180 of FIG. 1) may capture a still image and/or a video. According to an embodiment, the camera module 1050 may be disposed in a lens frame and may be disposed around the display member 1031.

According to an embodiment, a first camera module 1051 may capture and/or recognize the trajectory of the user's eye (e.g., pupil or iris) or gaze. According to an embodiment, the first camera module 1051 may periodically or aperiodically transmit information related to the trajectory of the user's eye or gaze (e.g., trajectory information) to the processor (e.g., the processor 120 of FIG. 1).

According to an embodiment, the second camera module 1053 may capture an external image.

According to an embodiment, a third camera module 1055 may be used for hand detection and tracking, and recognition of the user's gesture (e.g., hand motion). According to an embodiment, the third camera module 1055 may be used for 3 degrees of freedom (3DoF) or 6DoF head tracking, location (space, environment) recognition and/or movement recognition. The second camera module 1053 may also be used for hand detection and tracking and recognition of the user's gesture according to an embodiment. According to an embodiment, at least one of the first camera module 1051 to the third camera module 1055 may be replaced with a sensor module (e.g., a LiDAR sensor). For example, the sensor module may include at least one of a vertical cavity surface emitting laser (VCSEL), an infrared sensor, and/or a photodiode.

According to an embodiment, the electronic device 101 may include sound input devices 1062-1 and 1062-2 and sound output devices 1063-1 and 1063-2.

As described above, according to an embodiment, the electronic device 101 may have a form factor to be worn on the user's head. For example, the electronic device 101 may including a housing to be worn on the user's head. The electronic device 101 may further include a strap and/or a wearing member to be fixed on the user's body part. For example, the electronic device 101 may provide the user experience based on augmented reality, virtual reality, and/or mixed reality while worn on the user's head.

According to an embodiment, the electronic device 101 may have a form factor that the user may carry (e.g., grippable in the user's hand). For example, the electronic device 101 may be a cellular phone or a tablet.

According to an embodiment, the electronic device 101 may be a device placed in a specific space or attached to another device. The implementation method of the electronic device 101 is not limited.

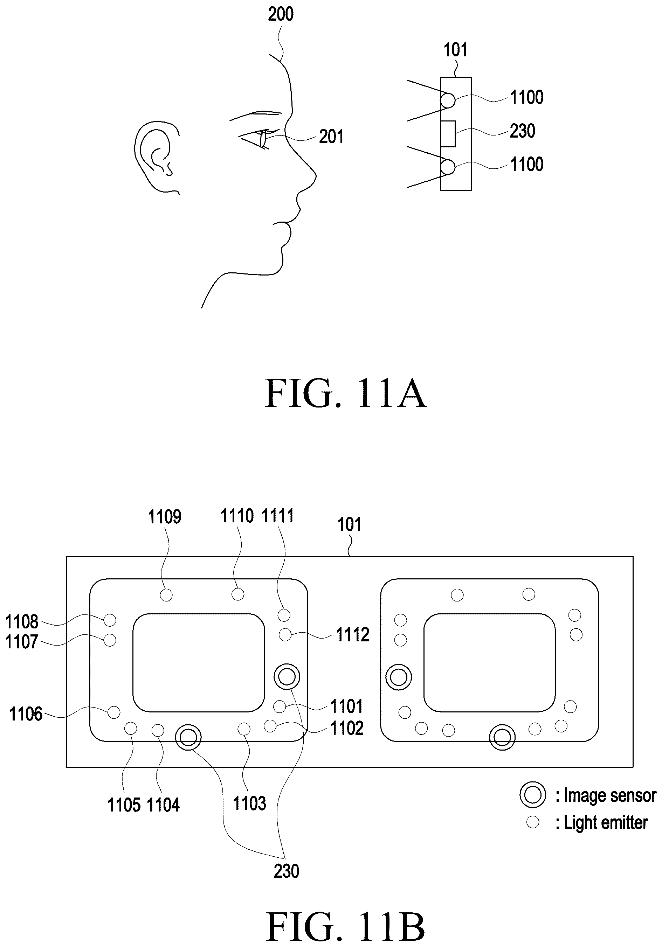

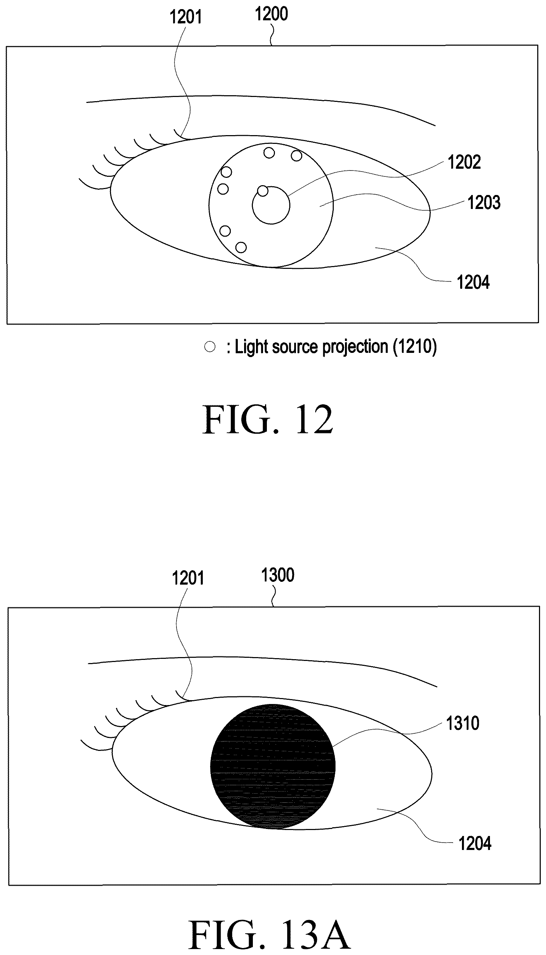

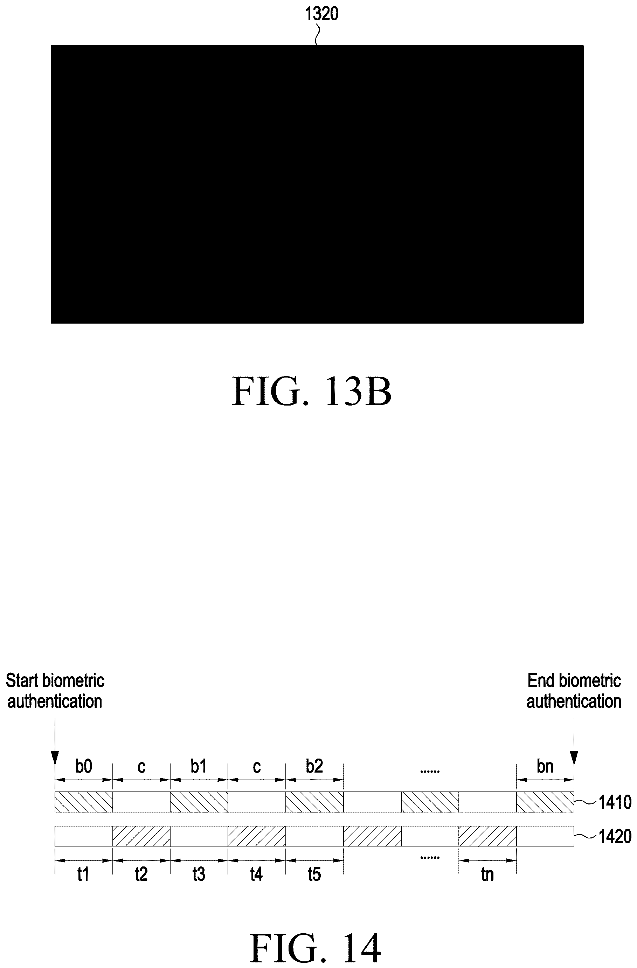

FIG. 11A is a view illustrating a light emitter 1100 and an image sensor 230 of an electronic device 101 according to an embodiment. FIG. 11B is a view illustrating a light emitter 1101, 1102, 1103, 1104, 1105, 1106, 1107, 1108, 1109, 1110, 1111, and/or 1112 and an image sensor 230 of an electronic device 101 according to an embodiment. FIG. 12 is a view illustrating operations of an electronic device 101 according to an embodiment. FIG. 13A is a view illustrating operations of an electronic device 101 according to an embodiment. FIG. 13B is a view illustrating operations of an electronic device 101 according to an embodiment. FIGS. 11A, 11B, 12, 13A, and 13B may be described with reference to the previously described embodiments.

Referring to FIG. 11A, according to an embodiment, an electronic device 101 may include a light emitter 1100 and an image sensor 230. The light emitter 1100 may be the flash 220 of FIG. 2. The light emitter 1100 may include an infrared light emitting diode (IR LED). The number of light emitters 1100 is not limited. For example, the light emitter 1100 of FIG. 11A may include a plurality of light emitters 1101, 1102, 1103, 1104, 1105, 1106, 1107, 1108, 1109, 1110, 1111, and 1112 of FIG. 11B.

Referring to FIGS. 11A and 11B, according to an embodiment, the electronic device 101 may be implemented with a goggles, glasses, or headset type design (e.g., a form factor to be worn on the user's head). With this design, the electronic device 101 is less sensitive to the external environment factors such as light, in a state of being in tight contact or fixed on the user's eyes, and operate with the image sensor 230 (e.g., an infrared (IR) camera) fixed at the positions of the eyes.

Referring to FIG. 11B, according to an embodiment, the electronic device 101 may include a plurality of light emitters 1101, 1102, 1103, 1104, 1105, 1106, 1107, 1108, 1109, 1110, 1111, and 1112 and image sensors 230. FIG. 11B is a view illustrating light emitters and image sensors corresponding to the left and right eyes of the user. For convenience of description, referring to FIG. 11B, a plurality of light emitters 1101, 1102, 1103, 1104, 1105, 1106, 1107, 1108, 1109, 1110, 1111, and 1112) and a plurality of image sensors 230 corresponding to the user's left eye may be described. This description may be equally applied to the light emitters and image sensors corresponding to the user's right eye. According to an embodiment, the electronic device 101 (e.g., the processor 120) may obtain raw data using at least one of a plurality of light emitters 1101, 1102, 1103, 1104, 1105, 1106, 1107, 1108, 1109, 1110, 1111, and 1112 and at least one of a plurality of image sensors 230. For example, the electronic device 101 (e.g., the processor 120) may control at least one of the plurality of light emitters 1101, 1102, 1103, 1104, 1105, 1106, 1107, 1108, 1109, 1110, 1111, and 1112 to turn on and control at least one of the rest to turn off according to the period. This is described below.

FIG. 12 may include raw data 1200 obtained through the image sensor 230. Referring to FIG. 12, a phenomenon in which a light emitter (e.g., at least one of 1101, 1102, 1103, 1104, 1105, 1106, 1107, 1108, 1109, 1110, 1111, and 1112 of FIG. 11B) is projected to the pupil 1202 and the iris 1203 in the raw data 1200 obtained through the image sensor 230 may be understood. For example, the raw data 1200 may include biometric data (e.g., the iris 1203). The raw data 1200 may include data about the eyebrow 1201, the pupil 1202, the iris 1203, and the sclera 1204. The electronic device 101 may obtain raw data 1200 after controlling at least one of the plurality of light emitters 1101, 1102, 1103, 1104, 1105, 1106, 1107, 1108, 1109, 1110, 1111, and 1112 to turn on. In this case, a light source (e.g., at least one of 1101, 1102, 1103, 1104, 1105, 1106, 1107, 1108, 1109, 1110, 1111, and 1112 of FIG. 11B) may be projected to the raw data 1200 (1210). As the light source (e.g., at least one of 1101, 1102, 1103, 1104, 1105, 1106, 1107, 1108, 1109, 1110, 1111, and 1112 of FIG. 11B) is projected to the raw data 1200 (1210), the data corresponding to the iris 1203 may be distorted. On the other hand, a gaze tracking algorithm (e.g., the second algorithm 821 of FIG. 8) that requires data about eyelids and eyebrows may be less sensitive to distortion caused by such light source projection (e.g., 1210). This is described in detail with reference to FIGS. 14 to 16.

According to an embodiment, FIG. 13A may include data 1300 on which image processing has been performed. According to an embodiment, the electronic device 101 (e.g., the processor 120) may perform image processing on an area corresponding to biometric data (e.g., an area corresponding to the iris 1203). For example, referring to FIG. 13A, the electronic device 101 (e.g., the processor 120) may identify the location of the pupil 1202 (or the iris 1203) in the raw data 1200 of FIG. 12, and may distort or delete (1310) peripheral data including the iris 1203 based on the identified location of the pupil 1202 (or the iris 1203). For example, the electronic device 101 (e.g., the processor 120) may identify the location of a designated area based on the characteristics (e.g., a goggle, glasses, or headset type design) of the electronic device 101. The designated area may be an area corresponding to biometric data. For example, the electronic device 101 may be implemented with a design (e.g., a form factor for being worn on the user's head) of a goggle, glasses, or headset type, and accordingly, the location of an area corresponding to biometric data in raw data obtained from the electronic device 101 may be included in a designated range. For example, in the state in which the user wears the electronic device 101, the distance and angle from the user's body part (e.g., eyebrows, eyeballs, pupils, and iris) to the electronic device 101 (e.g., the image sensor 230 of the electronic device 101) may be constant. Accordingly, the raw data obtained by the electronic device 101 may include biometric data, and the biometric data may be included in the designated area (e.g., the designated range) of the raw data. For example, the electronic device 101 may store, in the memory 130, information about the location of the designated area based on characteristics (e.g., a design of a goggle, glasses, or headset type) of the electronic device 101. For example, the electronic device 101 may obtain raw data while the electronic device 101 is worn on the user's head. The electronic device 101 (e.g., the processor 120) may identify, from the obtained raw data, the location of the designated area based on the characteristic of the electronic device 101 as the location of the area corresponding to the biometric data. The electronic device 101 (e.g., the processor 120) may perform image processing (e.g., distortion or deletion) on the area corresponding to biometric data corresponding to the location of a designated area. For example, the image processing of the area corresponding to the biometric data may include at least one of blank processing, blur processing, deletion of the biometric data, or hatching processing. According to an embodiment, the electronic device 101 (e.g., the processor 120) may identify the location of biometric data in raw data (or raw data on which image pre-processing has been performed) and may perform image processing (e.g., at least one of blank processing, removal of biometric data, blur processing, or hatching processing) on the identified location of the biometric data. For example, the electronic device 101 (e.g., the processor 120) may identify biometric data (e.g., the location of biometric data) from raw data (or raw data on which image pre-processing has been performed), based on information (e.g., information about the location of biometric data) stored in the memory 130. For example, the electronic device 101 (e.g., the processor 120) may store information about the location of biometric data to be included in the raw data in the memory 130 before the raw data is obtained. The electronic device 101 may identify the location of biometric data in raw data (or raw data on which image pre-processing has been performed), based on information stored in the memory 130 (e.g., information about the location of biometric data to be included in the raw data). According to an embodiment, the electronic device 101 may include the memory 130 in which information about the location of biometric data to be included in raw data is stored. According to an embodiment, the electronic device 101 may identify the location of the biometric data at the first time, based on a first raw data or the image data corresponding to the first raw data, and may store information about the identified location of the biometric data in the memory 130. The electronic device 101 may obtain the second raw data at a second time after the first time, and may identify the location of the biometric data in the second raw data (or the second raw data on which image pre-processing has been performed), based on the information about the location of the biometric data identified before the second time (e.g., at the first time).

According to an embodiment, FIG. 13B may include data 1320 on which image processing has been performed. According to an embodiment, the electronic device 101 (e.g., the processor 120) may perform image processing on the original data (e.g., raw data or raw data on which image pre-processing has been performed). For example, the electronic device 101 may perform image processing (e.g., distortion or deletion) on the entire raw data (or raw data on which image pre-processing has been performed). For example, image processing of the entire raw data (or raw data on which image pre-processing has been performed) may include at least one of blank processing, blur processing, or hatching processing.

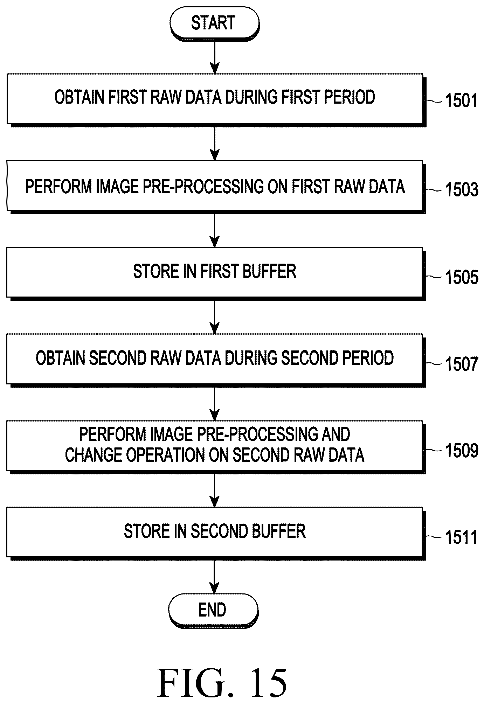

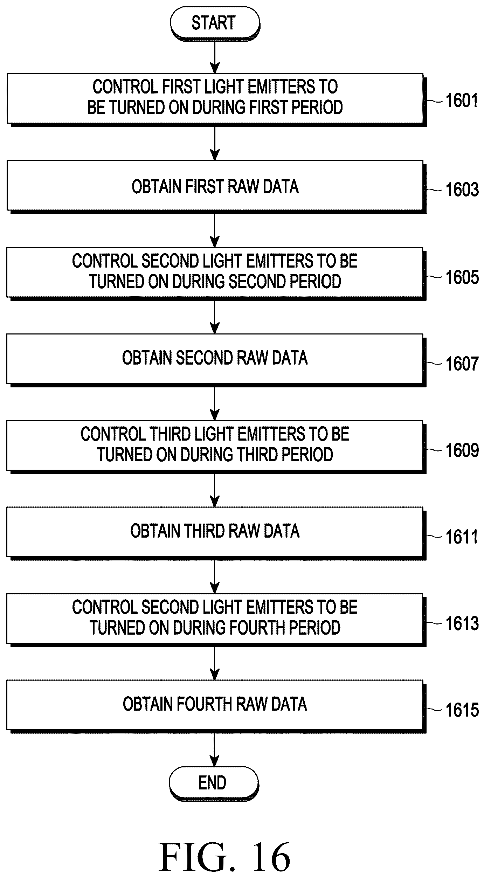

FIG. 14 is a view illustrating operations of an electronic device according to an embodiment. FIG. 15 is a flowchart illustrating an operation method of an electronic device according to an embodiment. FIG. 16 is a flowchart illustrating an operation method of an electronic device according to an embodiment. FIGS. 14, 15, and 16 may be described with reference to the embodiments described above.

Referring to FIG. 14, setting values of the plurality of light emitters 1101, 1102, 1103, 1104, 1105, 1106, 1107, 1108, 1109, 1110, 1111, and 1112 of FIG. 11 may be understood. The "setting values" may include information about which of the plurality of light emitters 1101, 1102, 1103, 1104, 1105, 1106, 1107, 1108, 1109, 1110, 1111, and 1112 is to be controlled to turn on, and/or information about brightness (e.g., auto exposure gain) of the light emitters controlled to turn on among the plurality of light emitters 1101, 1102, 1103, 1104, 1105, 1106, 1107, 1108, 1109, 1110, 1111, and 1112. For example, the setting values may include information about the number, location, and/or brightness of the light emitters controlled to turn on. For example, the setting values may include a first setting value(s) (e.g., b0, b1, b2, and bn of 1410 of FIG. 14) for biometric perception and a second setting value (e.g., c of 1420 of FIG. 14) for camera image processing that does not require security. 1410 of FIG. 14 may show that raw data is obtained based on first setting value(s) (e.g., b0, b1, b2, and bn of 1410 of FIG. 14) for biometric perception during a period including t1, t3, and t5. 1420 of FIG. 14 may show that raw data is obtained based on the second setting value for camera image processing that does not require security during a period including t2, t4, and the number. For example, based on the first setting value(s) for biometric perception, the electronic device 101 (e.g., the processor 120) may obtain raw data including biometric data using the image sensor 230. For example, based on the second setting value for camera image processing that does not require security, the electronic device 101 (e.g., the processor 120) may obtain raw data that does not include biometric data (e.g., raw data in which biometric data has been distorted) using the image sensor 230. According to an embodiment, there may be a plurality of first setting values for biometric perception, and a next setting value for biometric perception may be determined based on feedback on a previous setting value for biometric perception. For example, in FIG. 14, b1 may be determined based on the feedback for b0, b2 may be determined based on the feedback for b1, and this operation may be repeated. According to an embodiment, there may be one first setting value for biometric perception, and the setting value for biometric perception may not be changed. According to an embodiment, when the embodiment of FIG. 14 is applied, the electronic device 101 may not perform a change operation on biometric data. According to an embodiment, even when the embodiment of FIG. 14 is applied, the electronic device 101 may perform a change operation on biometric data.

FIG. 15 may be described with reference to FIG. 14 and the above-described embodiments.

At least some of the operations of FIG. 15 may be omitted. The operation order of the operations of FIG. 15 may be changed. Operations other than the operations of FIG. 15 may be performed before, during, or after the operations of FIG. 15.

Referring to FIG. 15, in operation 1501, according to an embodiment, the electronic device 101 (e.g., the processor 120) may obtain first raw data during the first period. For example, the electronic device 101 may obtain first raw data during the first period t1 of FIG. 14. During the first period t1 of FIG. 14, the electronic device 101 may control the first light emitters among the plurality of light emitters 1101, 1102, 1103, 1104, 1105, 1106, 1107, 1108, 1109, 1110, 1111, and 1112 to turn on, based on the first setting value (e.g., b0 among the first setting values of FIG. 14) for biometric perception. For example, the first light emitters may include 1101, 1103, 1105, 1107, 1109, and 1111 of FIG. 11B, but the criteria for selecting the first light emitters are not limited. During the first period t1 of FIG. 14, the electronic device 101 may control the first light emitters among the plurality of light emitters 1101, 1102, 1103, 1104, 1105, 1106, 1107, 1108, 1109, 1110, 1111, and 1112 to turn on based on the first setting value (e.g., b0 among the first setting values of FIG. 14) for biometric perception, and then may obtain the first raw data using the image sensor 230.

In operation 1503, according to an embodiment, the electronic device 101 (e.g., the processor 120) may perform image pre-processing on the first raw data of operation 1501, using the image pre-processor 270. According to an embodiment, operation 1503 may be omitted.

In operation 1505, according to an embodiment, the electronic device 101 (e.g., the processor 120) may store first raw data of operation 1501 or data obtained by performing image pre-processing in operation 1503 in the first buffer 310 of the memory 130. In operation 1505, the data stored in the first buffer 310 may include biometric data. Thereafter, the electronic device 101 may perform biometric authentication based on data including biometric data stored in the first buffer 310.

In operation 1507, according to an embodiment, the electronic device 101 (e.g., the processor 120) may obtain second raw data during the second period. For example, the electronic device 101 may obtain second raw data during the second period t2 of FIG. 14. During the second period t2 of FIG. 14, the electronic device 101 may control the second light emitters among the plurality of light emitters 1101, 1102, 1103, 1104, 1105, 1106, 1107, 1108, 1109, 1110, 1111, and 1112 to turn on, based on the second setting value (e.g., c of FIG. 14) for camera image processing that does not require security. For example, the second light emitters may include 1101, 1102, 1103, 1104, 1105, 1106, 1107, 1108, 1109, 1110, 1111, and 1112 of FIG. 11B, but the criteria for selecting the second light emitters are not limited thereto.

According to an embodiment, the number of first light emitters (e.g., 1101, 1103, 1105, 1107, 1109, and 1111 of FIG. 11B) of operation 1501 may be less than the number of second light emitters (e.g., 1101, 1102, 1103, 1104, 1105, 1106, 1107, 1108, 1109, 1110, 1111, and 1112 of FIG. 11B) of operation 1507. For example, the number of light emitters controlled to turn on in operation 1501 may be a number appropriate for biometric authentication. The number of light emitters controlled to turn on in operation 1507 may be larger than the number of light emitters controlled to turn on in operation 1501. Accordingly, raw data (e.g., second raw data) obtained in operation 1507 may be raw data in which biometric data has been distorted. According to an embodiment, the number of first light emitters of operation 1501 and the number of second light emitters of operation 1507 may be the same, and the locations of at least some of the first light emitters of operation 1501 and the locations of at least some of the second light emitters of operation 1507 may be different. For example, the first light emitters of operation 1501 may be selected as light emitters disposed at locations appropriate for biometric authentication. The second light emitters of operation 1507 may be selected as light emitters disposed at designated locations so that data for biometric authentication may be distorted. According to an embodiment, the first light emitters of operation 1501 and the second light emitters of operation 1507 may be the same, and the brightness of at least one of the first light emitters of operation 1501 and the brightness of at least one of the second light emitters of operation 1507 may be different. For example, the brightness of at least one of the first light emitters of operation 1501 may be a brightness appropriate for biometric authentication. The brightness of at least one of the second light emitters of operation 1507 may be a designated brightness that causes data for biometric authentication to be distorted. Embodiments of the numbers, locations, and brightness of the above-described light emitters may be applied interchangeably. For example, at least one of the number, location, and brightness of the first light emitters of operation 1501 may be different from at least one of the number, location, and brightness of the second light emitters of operation 1507.

In operation 1509, according to an embodiment, the electronic device 101 (e.g., the processor 120) may perform image pre-processing and a change operation on the second raw data of operation 1507 using the image pre-processor 270. According to an embodiment, operation 1509 may be omitted. For example, image pre-processing of operation 1509 may be performed, and only the change operation may be omitted. For example, both image pre-processing and change operation of operation 1509 may be omitted.

In operation 1511, according to an embodiment, the electronic device 101 (e.g., the processor 120) may store the second raw data of operation 1507 or data obtained by performing at least one of the image pre-processing or change operation of operation 1509 in the second buffer 320 of the memory 130. In operation 1511, the data stored in the second buffer 320 may not include biometric data, or the data stored in the second buffer 320 may include distorted biometric data. Thereafter, the electronic device 101 may perform camera image processing that does not require security, based on data stored in the second buffer 320.

FIG. 15 describes the first period and the second period, but this describes some of the operations of the electronic device 101, and the operations of FIG. 15 may be repeated. For example, operations 1501 to 1505 may be performed during the first period, operations 1507 to 1511 may be performed during the second period after the first period, operations 1501 to 1505 may be performed during the third period after the second period, and operations 1507 to 1511 may be performed during the fourth period after the third period, and such operations may be repeated.

FIG. 16 may be described with reference to FIGS. 14 and 15, and the above-described embodiments.

At least some of the operations of FIG. 16 may be omitted. The operation order of the operations of FIG. 16 may be changed. Operations other than the operations of FIG. 16 may be performed before, during, or after the operations of FIG. 16.

Referring to FIG. 16, in operation 1601, according to an embodiment, the electronic device 101 (e.g., the processor 120) may control the first light emitters (e.g., at least some of 1101, 1102, 1103, 1104, 1105, 1106, 1107, 1108, 1109, 1110, 1111, and 1112 of FIG. 11B) to turn on during the first period. For example, during the first period t1 of FIG. 14, the electronic device 101 may control first light emitters among the plurality of light emitters 1101, 1102, 1103, 1104, 1105, 1106, 1107, 1108, 1109, 1110, 1111, and 1112 to turn on, based on the setting value (e.g., b0 of FIG. 14) for biometric perception. For example, the first light emitters may include 1101, 1103, 1105, 1107, 1109, and 1111 of FIG. 11B, but the criteria for selecting the first light emitters are not limited. For example, the setting value 1601 (e.g., b0 of FIG. 14) may be a default setting value for biometric authentication.

In operation 1603, according to an embodiment, the electronic device 101 (e.g., the processor 120) may control the first light emitters (e.g., at least one of 1101, 1102, 1103, 1104, 1105, 1106, 1107, 1108, 1109, 1110, 1111, and 1112 of FIG. 11B) of operation 1601 among the plurality of light emitters 1101, 1102, 1103, 1104, 1105, 1106, 1107, 1108, 1109, 1110, 1111, and 1112 to turn on, and then may obtain first raw data using the image sensor 230. According to an embodiment, the electronic device 101 (e.g., the processor 120) may perform operation 1505, or operations 1503 and 1505 on the first raw data of operation 1603. The first raw data of operation 1603 may include, e.g., biometric data of a level for biometric authentication. Based on the first raw data including biometric data of the level for biometric authentication, the setting value (e.g., the number, location, and/or brightness of light emitters controlled to turn on) for biometric authentication may not be changed. When the setting value is not changed, the setting value of operation 1601 and the setting value of operation 1609 may be the same. The first raw data of operation 1603 may not include, e.g., biometric data of the level for biometric authentication. Based on the first raw data not including biometric data of the level for biometric authentication, the setting value (e.g., the number, location, and/or brightness of light emitters controlled to turn on) for biometric authentication may be updated. The electronic device 101 (e.g., the processor 120) may update the setting value (e.g., the number, location, and/or brightness of light emitters controlled to turn on) for biometric authentication. When the setting value is updated, the setting value of operation 1601 and the setting value of operation 1609 may be different.

In operation 1605, according to an embodiment, the electronic device 101 (e.g., the processor 120) may control the second light emitters (e.g., at least one of 1101, 1102, 1103, 1104, 1105, 1106, 1107, 1108, 1109, 1110, 1111, and 1112 of FIG. 11B) to turn on during the second period. For example, during the second period t2 of FIG. 14, the electronic device 101 may control the second light emitters among the plurality of light emitters 1101, 1102, 1103, 1104, 1105, 1106, 1107, 1108, 1109, 1110, 1111, and 1112 to turn on, based on the setting value (e.g., c of FIG. 14) for camera image processing that does not require security. For example, the second light emitters may include 1101, 1102, 1103, 1104, 1105, 1106, 1107, 1108, 1109, 1110, 1111, and 1112 of FIG. 11B, but the criteria for selecting the second light emitters are not limited thereto. The setting value (e.g., b0 of FIG. 14) of operation 1601 may be different from the setting value (e.g., c of FIG. 14) of operation 1605. At least one of the number, location, or brightness of the first light emitters of operation 1601 may be different from at least one of the number, location, or brightness of the second light emitters of operation 1605. For example, the number of the second light emitters of operation 1605 may be larger than the number of the first light emitters of operation 1601.

In operation 1607, according to an embodiment, the electronic device 101 (e.g., the processor 120) may control the second light emitters (e.g., at least one of 1101, 1102, 1103, 1104, 1105, 1106, 1107, 1108, 1109, 1110, 1111, and 1112 of FIG. 11B) of operation 1605 among the plurality of light emitters 1101, 1102, 1103, 1104, 1105, 1106, 1107, 1108, 1109, 1110, 1111, and 1112 to turn on, and then may obtain the second raw data using the image sensor 230. According to an embodiment, the electronic device 101 (e.g., the processor 120) may perform operation 1511, or operations 1509 and 1511 on the second raw data of operation 1607.

In operation 1609, according to an embodiment, the electronic device 101 (e.g., the processor 120) may control the third light emitters (e.g., at least one of 1101, 1102, 1103, 1104, 1105, 1106, 1107, 1108, 1109, 1110, 1111, and 1112 of FIG. 11B) to turn on during the third period. For example, during the third period t3 of FIG. 14, the electronic device 101 may control the third light emitters among the plurality of light emitters 1101, 1102, 1103, 1104, 1105, 1106, 1107, 1108, 1109, 1110, 1111, and 1112 to turn on, based on the setting value (e.g., b1 of FIG. 14) for biometric perception. For example, the third light emitters may include 1102, 1104, 1106, 1108, 1110, and 1112 of FIG. 11B, but the criteria for selecting the third light emitters are not limited thereto. As described above in operations 1601 and 1603, the setting value of operation 1609 may be the same as or different from the setting value of operation 1601. For example, the setting value (e.g., b1 of FIG. 14) of 1609 may be a setting value updated based on the default setting value (e.g., b0 of FIG. 14). Based on the setting value of operation 1609 being different from the setting value of operation 1601, at least one of the first light emitters of operation 1601 may be different from at least one of the third light emitters of operation 1609. For example, the setting value (e.g., b1 of FIG. 14) of 1609 may be the same as the default setting value (e.g., b0 of FIG. 14) for biometric authentication. Based on the setting value of operation 1609 being the same as the setting value of operation 1601, the first light emitters of operation 1601 may be the same as the third light emitters of operation 1609.

In operation 1611, according to an embodiment, the electronic device 101 (e.g., the processor 120) may control the third light emitters (e.g., at least one of 1101, 1102, 1103, 1104, 1105, 1106, 1107, 1108, 1109, 1110, 1111, and 1112 of FIG. 11B) of operation 1609 among the plurality of light emitters 1101, 1102, 1103, 1104, 1105, 1106, 1107, 1108, 1109, 1110, 1111, and 1112 to turn on, and then may obtain third raw data using the image sensor 230. According to an embodiment, the electronic device 101 (e.g., the processor 120) may perform operation 1505, or operations 1503 and 1505 on the third raw data of operation 1611.

In operation 1613, according to an embodiment, the electronic device 101 (e.g., the processor 120) may control the second light emitters (e.g., at least one of 1101, 1102, 1103, 1104, 1105, 1106, 1107, 1108, 1109, 1110, 1111, and 1112 of FIG. 11B) to turn on during the fourth period. For example, during the fourth period t4 of FIG. 14, the electronic device 101 may control the second light emitters among the plurality of light emitters 1101, 1102, 1103, 1104, 1105, 1106, 1107, 1108, 1109, 1110, 1111, and 1112 to turn on, based on the setting value (e.g., c of FIG. 14) for camera image processing that does not require security. The second light emitters of operation 1613 may be the same as the second light emitters of operation 1605.

In operation 1615, according to an embodiment, the electronic device 101 (e.g., the processor 120) may control the second light emitters (e.g., at least one of 1101, 1102, 1103, 1104, 1105, 1106, 1107, 1108, 1109, 1110, 1111, and 1112 of FIG. 11B) of operation 1613 among the plurality of light emitters 1101, 1102, 1103, 1104, 1105, 1106, 1107, 1108, 1109, 1110, 1111, and 1112 to turn on, and then may obtain fourth raw data using the image sensor 230. According to an embodiment, the electronic device 101 (e.g., the processor 120) may perform operation 1511, or operations 1509 and 1511 on the fourth raw data of operation 1615.

It will be understood by one of ordinary skill in the art that the embodiments described herein may be interchangeably applied within an applicable range. For example, it will be understood by one of ordinary skill in the art that at least some operations of an embodiment described in the disclosure may be omitted and applied, or at least some operations of an embodiment may be connected and applied.

The disclosure is not limited to the foregoing, and other unmentioned variations would be apparent to one of ordinary skill in the art from the disclosure.

Effects obtainable from the disclosure are not limited to the above-mentioned effects, and other effects not mentioned may be clearly understood by those skilled in the art from the following description.

According to an example embodiment, an electronic device 101 may include an image sensor 230, an image pre-processor 270, comprising circuitry, memory 130 storing instructions, and at least one processor 120, comprising processing circuitry. The instructions, when executed by at least one processor, individually and/or collectively, may cause the electronic device 101 to: obtain raw data including biometric data using the image sensor 230. The instructions, when executed by at least one processor 120, individually and/or collectively, may cause the electronic device 101 to store, in a first buffer 310, the raw data as first image data. The instructions, when executed by at least one processor 120, individually and/or collectively, may cause the electronic device 101 to store, in a second buffer 320, second image data configured to be generated by applying a change operation to the raw data using the image pre-processor 270. The instructions, when executed by at least one processor 120, individually and/or collectively, may cause the electronic device 101 to forward the first image data stored in the first buffer 310 to a first application included in a secure area and apply a first algorithm for biometric authentication to the first image data. The instructions, when executed by at least one processor 120, individually and/or collectively, may cause the electronic device 101 to forward the second image data stored in the second buffer 320 to a second application included in a non-secure area and apply a second algorithm different from the first algorithm to the second image data.

According to an example embodiment, the instructions, when executed by at least one processor 120, individually and/or collectively, may cause the electronic device 101 to forward the second image data stored in the second buffer 320 to the second application during a period at least partially overlapping a period of forwarding the first image data stored in the first buffer 310 to the first application.

According to an example embodiment, the change operation may include performing image processing on the raw data. The image processing may include at least one of blank processing, blur processing, or hatching processing.

According to an example embodiment, the image processing may include at least one of the blank processing, the blur processing, or the hatching processing for the entire raw data.

According to an example embodiment, the image processing may include at least one of the blank processing, the blur processing, or the hatching processing for an area corresponding to the biometric data included in the raw data.

According to an example embodiment, the instructions, when executed by at least one processor 120, individually and/or collectively, may cause the electronic device 101 to obtain the raw data while the electronic device 101 is worn on a user's head. The instructions, when executed by at least one processor 120, individually and/or collectively, may cause the electronic device 101 to identify a location of a designated area based on a characteristic of the electronic device 101 in the raw data. The instructions, when executed by at least one processor 120, individually and/or collectively, may cause the electronic device 101 to perform the image processing on the area corresponding to the biometric data corresponding to the location of the designated area.

According to an example embodiment, the instructions, when executed by at least one processor 120, individually and/or collectively, may cause the electronic device 101 to obtain first raw data among the raw data during a first period using the image sensor 230. The instructions, when executed by at least one processor 120, individually and/or collectively, may cause the electronic device 101 to store, in the first buffer 310, at least a portion of the first image data identified by performing the image pre-processing on the first raw data using the image pre-processor 270. The instructions, when executed by at least one processor 120, individually and/or collectively, may cause the electronic device 101 to obtain second raw data among the raw data during a second period after the first period using the image sensor 230. The instructions, when executed by at least one processor 120, individually and/or collectively, may cause the electronic device 101 to store, in the second buffer 320, at least a portion of the second image data identified by performing the image pre-processing and the change operation on the second raw data using the image pre-processor 270.

According to an example embodiment, the electronic device 101 may include a plurality of light emitters 1100, 1101, 1102, 1103, 1104, 1105, 1106, 1107, 1108, 1109, 1110, 1111, and 1112. The instructions, when executed by at least one processor 120, individually and/or collectively, may cause the electronic device 101 to control the first light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 during the first period. The instructions, when executed by at least one processor 120, individually and/or collectively, may cause the electronic device 101 to control second light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during the second period. A number of the first light emitters 1100, 1101, 1102, 1103, 1104, 1105, 1106, 1107, 1108, 1109, 1110, 1111, and 1112 may be less than a number of the second light emitters 1100, 1101, 1102, 1103, 1104, 1105, 1106, 1107, 1108, 1109, 1110, 1111, and 1112.

According to an example embodiment, the instructions, when executed by at least one processor 120, individually and/or collectively, may cause the electronic device 101 to control third light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during a third period after the second period. At least one of the third light emitters 1100, 1101, 1102, 1103, 1104, 1105, 1106, 1107, 1108, 1109, 1110, 1111, and 1112 may be different from at least one of the first light emitters 1100, 1101, 1102, 1103, 1104, 1105, 1106, 1107, 1108, 1109, 1110, 1111, and 1112. The instructions, when executed by at least one processor 120, individually and/or collectively, may cause the electronic device 101 to obtain third raw data among the raw data during the third period using the image sensor 230. The instructions, when executed by at least one processor 120, individually and/or collectively, may cause the electronic device 101 to store, in the first buffer 310, at least a portion of the first image data identified by performing the image pre-processing on the third raw data using the image pre-processor 270.

According to an example embodiment, the instructions, when executed by at least one processor 120, individually and/or collectively, may cause the electronic device 101 to control the second light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during a fourth period after the third period. The instructions, when executed by at least one processor 120, individually and/or collectively, may cause the electronic device 101 to obtain fourth raw data among the raw data during the fourth period using the image sensor 230. The instructions, when executed by at least one processor 120, individually and/or collectively, may cause the electronic device 101 to store, in the second buffer 320, at least a portion of the second image data identified by performing the image pre-processing and the change operation on the fourth raw data using the image pre-processor 270.

According to an example embodiment, a method for operating an electronic device 101 may comprise obtaining raw data including biometric data using an image sensor 230 of an electronic device 101. The method may comprise storing, in a first buffer 310, the raw data as first image data. The method may comprise storing second image data generated by applying a change operation to the raw data in the second buffer 320. The method may include forwarding the first image data stored in the first buffer 310 to a first application included in a secure area, and applying a first algorithm for biometric authentication to the first image data. The method may include forwarding the second image data stored in the second buffer 320 to a second application included in a non-secure area and applying a second algorithm different from the first algorithm to the second image data.

According to an example embodiment, forwarding the second image data to the second application may include forwarding the second image data stored in the second buffer 320 to the second application during a period at least partially overlapping a period of forwarding the first image data stored in the first buffer 310 to the first application.

According to an example embodiment, the change operation may include performing image processing on the raw data. The image processing may include at least one of blank processing, blur processing, or hatching processing.

According to an example embodiment, the image processing may include at least one of the blank processing, the blur processing, or the hatching processing for the entire raw data.

According to an example embodiment, the image processing may include at least one of the blank processing, the blur processing, or the hatching processing for an area corresponding to the biometric data included in the raw data.

According to an example embodiment, obtaining the raw data may include obtaining the raw data while the electronic device 101 is worn on a user's head. The change operation may include identifying a location of a designated area based on a characteristic of the electronic device 101 in the raw data. The change operation may include performing the image processing on the area corresponding to the biometric data corresponding to the location of the designated area.

According to an example embodiment, obtaining the raw data may include obtaining first raw data among the raw data during a first period using the image sensor 230. Storing the first image data in the first buffer 310 may include storing, in the first buffer 310, at least a portion of the first image data identified by performing the image pre-processing on the first raw data. Obtaining the raw data may include obtaining second raw data among the raw data for a second period after the first period using the image sensor 230. Storing the second image data in the second buffer 320 may include storing, in the second buffer 320, at least a portion of the second image data identified by performing the image pre-processing and the change operation on the second raw data.

According to an example embodiment, the method may comprise controlling first light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during the first period. The method may comprise controlling second light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during the second period. A number of the first light emitters 1100, 1101, 1102, 1103, 1104, 1105, 1106, 1107, 1108, 1109, 1110, 1111, and 1112 may be less than a number of the second light emitters 1100, 1101, 1102, 1103, 1104, 1105, 1106, 1107, 1108, 1109, 1110, 1111, and 1112.

According to an example embodiment, the method may comprise controlling third light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during a third period after the second period. At least one of the third light emitters 1100, 1101, 1102, 1103, 1104, 1105, 1106, 1107, 1108, 1109, 1110, 1111, and 1112 may be different from at least one of the first light emitters 1100, 1101, 1102, 1103, 1104, 1105, 1106, 1107, 1108, 1109, 1110, 1111, and 1112. The method may comprise obtaining third raw data among the raw data during the third period using the image sensor 230. The method may further include storing, in the first buffer 310, at least a portion of the first image data identified by performing the image pre-processing on the third raw data using the image pre-processor 270.

According to an example embodiment, the method may comprise controlling the second light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during a fourth period after the third period. The method may comprise obtaining fourth raw data among the raw data during the fourth period using the image sensor 230. The method may comprise storing, in the second buffer 320, at least a portion of the second image data identified by performing the image pre-processing and the change operation on the fourth raw data using the image pre-processor 270.

According to an example embodiment, in a non-transitory computer-readable recording medium storing instructions which, when executed by at least one processor 120, individually and/or collectively, of an electronic device 101, cause the electronic device 101 to perform at least one operation, the at least one operation may comprise obtaining raw data including biometric data using an image sensor 230 of the electronic device 101. The at least one operation may comprise storing, in a first buffer 310, the raw data as first image data. The at least one operation may comprise storing second image data generated by applying a change operation to the raw data in a second buffer 320. The at least one operation may comprise forwarding the first image data stored in the first buffer 310 to a first application included in a secure area and applying a first algorithm for biometric authentication to the first image data. The at least one operation may comprise forwarding the second image data stored in the second buffer 320 to a second application included in a non-secure area and applying a second algorithm different from the first algorithm to the second image data.

According to an example embodiment, forwarding the second image data to the second application may include forwarding the second image data stored in the second buffer 320 to the second application during a period at least partially overlapping a period of forwarding the first image data stored in the first buffer 310 to the first application.

According to an example embodiment, the change operation may include performing image processing on the raw data. The image processing may include at least one of blank processing, blur processing, or hatching processing.

According to an example embodiment, the image processing may include at least one of the blank processing, the blur processing, or the hatching processing for the entire raw data.

According to an example embodiment, the image processing may include at least one of the blank processing, the blur processing, or the hatching processing for an area corresponding to the biometric data included in the raw data.

According to an example embodiment, obtaining the raw data may include: obtaining the raw data while the electronic device 101 is worn on a user's head. The change operation may include identifying a location of a designated area based on a characteristic of the electronic device 101 in the raw data. The change operation may include performing the image processing on the area corresponding to the biometric data corresponding to the location of the designated area.

According to an example embodiment, obtaining the raw data may include obtaining first raw data among the raw data during a first period using the image sensor 230. Storing the first image data in the first buffer 310 may include storing, in the first buffer 310, at least a portion of the first image data identified by performing the image pre-processing on the first raw data. Obtaining the raw data may include obtaining second raw data among the raw data for a second period after the first period using the image sensor 230. Storing the second image data in the second buffer 320 may include storing, in the second buffer 320, at least a portion of the second image data identified by performing the image pre-processing and the change operation on the second raw data.

According to an example embodiment, the at least one operation may comprise controlling first light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during the first period. The at least one operation may comprise controlling second light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during the second period. A number of the first light emitters 1100, 1101, 1102, 1103, 1104, 1105, 1106, 1107, 1108, 1109, 1110, 1111, and 1112 may be less than a number of the second light emitters 1100, 1101, 1102, 1103, 1104, 1105, 1106, 1107, 1108, 1109, 1110, 1111, and 1112.

According to an example embodiment, the at least one operation may comprise controlling third light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during a third period after the second period. At least one of the third light emitters 1100, 1101, 1102, 1103, 1104, 1105, 1106, 1107, 1108, 1109, 1110, 1111, and 1112 may be different from at least one of the first light emitters 1100, 1101, 1102, 1103, 1104, 1105, 1106, 1107, 1108, 1109, 1110, 1111, and 1112. The at least one operation may comprise obtaining third raw data among the raw data during the third period using the image sensor 230. The at least one operation may comprise storing, in the first buffer 310, at least a portion of the first image data identified by performing the image pre-processing on the third raw data using the image pre-processor 270.

According to an example embodiment, the at least one operation may comprise controlling the second light emitters 1100, 1101, 1102, 1103, 1104, 1105, 1106, 1107, 1108, 1109, 1110, 1111, and 1112 among the plurality of light emitters 1100, 1101, 1102, 1103, 1104, 1105, 1106, 1107, 1108, 1109, 1110, 1111, and 1112 to be turned on during a fourth period after the third period. The at least one operation may comprise obtaining fourth raw data among the raw data during the fourth period using the image sensor 230. The at least one operation may comprise storing, in the second buffer 320, at least a portion of the second image data identified by performing the image pre-processing and the change operation on the fourth raw data using the image pre-processor 270.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium that is readable by a machine (e.g., an electronic device). For example, a processor (e.g., a controller) of the machine may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device (101) comprising:
an image sensor (230);
an image pre-processor (270) comprising circuitry;
memory (130) storing instructions; and
at least one processor (120) comprising processing circuitry;
wherein the instructions, when executed by at least one processor (120), individually and/or collectively, cause the electronic device (101) to:
obtain raw data including biometric data using the image sensor (230),
store, in a first buffer (310), the raw data as first image data,
store, in a second buffer (320), second image data generated by applying a change operation to the raw data using the image pre-processor (270),
forward the first image data stored in the first buffer (310) to a first application included in a secure area and apply a first algorithm for biometric authentication to the first image data, and
forward the second image data stored in the second buffer (320) to a second application included in a non-secure area and apply a second algorithm different from the first algorithm to the second image data.

2. The electronic device (101) of claim 1, wherein the instructions, when executed by at least one processor (120), individually and/or collectively, cause the electronic device (101) to:
forward the second image data stored in the second buffer (320) to the second application during a period at least partially overlapping a period of forwarding the first image data stored in the first buffer (310) to the first application.

3. The electronic device (101) of claim 1 or 2, wherein the change operation includes performing image processing on the raw data, and
wherein the image processing includes at least one of blanking, blurring, or hatching.

4. The electronic device (101) of any one of claims 1 to 3, wherein the image processing includes at least one of the blanking, the blurring, or the hatching for the entire raw data.

5. The electronic device (101) of any one of claims 1 to 4, wherein the image processing includes at least one of the blanking, the blurring, or the hatching for an area corresponding to the biometric data included in the raw data.

6. The electronic device (101) of any one of claims 1 to 5, wherein the instructions, when executed by at least one processor (120), individually and/or collectively, cause the electronic device (101) to:
identify location of a designated area based on a characteristic of the electronic device (101), and
perform the image processing on the area corresponding to the biometric data, wherein the area corresponding to the biometric data corresponds to the location of the designated area.

7. The electronic device (101) of any one of claims 1 to 6, wherein the instructions, when executed by at least one processor (120), individually and/or collectively, cause the electronic device (101) to:
obtain, using the image sensor (230), first raw data among the raw data during a first period,
store, in the first buffer (310), at least a portion of the first image data identified by performing the image pre-processing on the first raw data using the image pre-processor (270),
obtain, using the image sensor (230), second raw data among the raw data during a second period after the first period, and
store, in the second buffer (320), at least a portion of the second image data identified by performing the image pre-processing and the change operation on the second raw data using the image pre-processor (270).

8. The electronic device (101) of any one of claims 1 to 7, further comprising a plurality of light emitters (1100; 1101; 1102; 1103; 1104; 1105; 1106; 1107; 1108; 1109; 1110; 1111; 1112) comprising light emitting circuitry, and
wherein the instructions, when executed by at least one processor (120), individually and/or collectively, cause the electronic device (101) to:
during the first period, control first light emitters (1100; 1101; 1102; 1103; 1104; 1105; 1106; 1107; 1108; 1109; 1110; 1111; 1112) among the plurality of light emitters (1100; 1101; 1102; 1103; 1104; 1105; 1106; 1107; 1108; 1109; 1110; 1111; 1112) to be turned on, and
during the second period, control second light emitters (1100; 1101; 1102; 1103; 1104; 1105; 1106; 1107; 1108; 1109; 1110; 1111; 1112) among the plurality of light emitters (1100; 1101; 1102; 1103; 1104; 1105; 1106; 1107; 1108; 1109; 1110; 1111; 1112) to be turned on, and
wherein a number of the first light emitters (1100; 1101; 1102; 1103; 1104; 1105; 1106; 1107; 1108; 1109; 1110; 1111; 1112) is less than a number of the second light emitters (1100; 1101; 1102; 1103; 1104; 1105; 1106; 1107; 1108; 1109; 1110; 1111; 1112).

9. The electronic device (101) of any one of claims 1 to 8, wherein the instructions, when executed by at least one processor (120), individually and/or collectively, cause the electronic device (101) to:
during a third period after the second period, control third light emitters (1100; 1101; 1102; 1103; 1104; 1105; 1106; 1107; 1108; 1109; 1110; 1111; 1112) among the plurality of light emitters (1100; 1101; 1102; 1103; 1104; 1105; 1106; 1107; 1108; 1109; 1110; 1111; 1112) to be turned on, wherein at least one of the third light emitters (1100; 1101; 1102; 1103; 1104; 1105; 1106; 1107; 1108; 1109; 1110; 1111; 1112) are different from at least one of the first light emitters,
obtain, using the image sensor (230), third raw data among the raw data during the third period, and
store, in the first buffer (310), at least a portion of the first image data identified by performing the image pre-processing on the third raw data using the image pre-processor (270).

10. The electronic device (101) of any one of claims 1 to 9, wherein the instructions, when executed by at least one processor (120), individually and/or collectively, cause the electronic device (101) to:
during a fourth period after the third period, control the second light emitters (1100; 1101; 1102; 1103; 1104; 1105; 1106; 1107; 1108; 1109; 1110; 1111; 1112) among the plurality of light emitters (1100; 1101; 1102; 1103; 1104; 1105; 1106; 1107; 1108; 1109; 1110; 1111; 1112) to be turned on,
obtain, using the image sensor (230), fourth raw data among the raw data during the fourth period, and
store, in the second buffer (320), at least a portion of the second image data identified by performing the image pre-processing and the change operation on the fourth raw data using the image pre-processor (270).

11. A method of operating an electronic device (101), the method comprising:
obtaining raw data including biometric data using an image sensor (230) of the electronic device (101);
storing, in a first buffer (310), the raw data as first image data;
storing, in a second buffer (320), second image data generated by applying a change operation to the raw data;
forwarding the first image data stored in the first buffer (310) to a first application included in a secure area and applying a first algorithm for biometric authentication to the first image data; and
forwarding the second image data stored in the second buffer (320) to a second application included in a non-secure area and applying a second algorithm different from the first algorithm to the second image data.

12. The method of claim 11,
wherein forwarding the second image data to the second application includes
forwarding the second image data stored in the second buffer (320) to the second application during a period at least partially overlapping a period of forwarding the first image data stored in the first buffer (310) to the first application.

13. The method of claim 11 or 12,
wherein the change operation includes performing image processing on the raw data, and
wherein the image processing includes at least one of blank processing, blur processing, or hatching processing.

14. The method of any one of claims 11 to 13,
wherein the image processing includes at least one of the blank processing, the blur processing, or the hatching processing for the entire raw data.

15. A non-transitory computer-readable recording medium storing instructions which, when executed by at least one processor (120), individually and/or collectively, of an electronic device (101), cause the electronic device (101) to perform at least one operation comprising:
obtaining raw data including biometric data using an image sensor (230) of the electronic device (101);
storing, in a first buffer (310), the raw data as first image data;
storing, in a second buffer (320), second image data generated by applying a change operation to the raw data;
forwarding the first image data stored in the first buffer (310) to a first application included in a secure area and applying a first algorithm for biometric authentication to the first image data; and
forwarding the second image data stored in the second buffer (320) to a second application included in a non-secure area and applying a second algorithm different from the first algorithm to the second image data.
